# EUROPEAN PATENT SPECIFICATION

(11) **EP 1 478 232 B1**
(45) Date of publication and mention of the grant of the patent: **17.10.2007**
(21) Application number: 02728388.6
(22) Date of filing: 28.02.2002
(51) Int. Cl.: A01N 37/02

(54) **DIESTER DICARBOXYLATE ANTIMICROBIAL COMPOSITIONS AND METHODS EMPLOYING THEM**
ANTIMIKROBIELLE ZUSAMMENSETZUNGEN ENTHALTEND DIESTER DICARBONSÄUREN UND DESSEN VERWENDUNG
COMPOSITIONS ANTIMICROBIENNES A BASE DE DIESTER DICARBOXYLIQUE ET PROCEDES D'UTILISATIONS ASSOCIES

(43) Date of publication of application: 24.11.2004
(73) Proprietor: ECOLAB INC., St. Paul Minnesota 55102 (US)
(72) Inventor: HEI, Robert, D., P., Baldwin, WI 54002 (US); HERDT, Brandon, Hastings, MN 55033 (US); GRAB, Lawrence, Woodbury, MN 55125 (US)
(74) Representative: Polypatent
(86) International application number: PCT/US2002/006319
(87) International publication number: WO 2003/073849

(56) References cited:
- FURUTA T ET AL: "RELATIONSHIP BETWEEN THE EFFECTS ON BACTERICIDAL ACTIVITY OF SELECTED DISINFECTANTS AND THE HYDROPHOBIC CHARACTERS OF DIBASIC ACID DIESTERS" CHEMICAL & PHARMACEUTICAL BULLETIN (TOKYO), vol. 40, no. 5, 1992, pages 1309-1312, XP001106528 ISSN: 0009-2363
- DATABASE WPI Week 18 Derwent Publications Ltd., London, GB; AN 1997-196010 XP002215840 & JP 08 291050 A (HISAMITSU PHARMACEUT CO INC), 5 November 1996 (1996-11-05)
- PATENT ABSTRACTS OF JAPAN vol. 012, no. 279 (C-517), 1 August 1988 (1988-08-01) & JP 63 057502 A (SARAYA KK), 12 March 1988 (1988-03-12)
- PATENT ABSTRACTS OF JAPAN vol. 017, no. 413 (C-1092), 3 August 1993 (1993-08-03) & JP 05 085901 A (HOKKO CHEM IND CO LTD), 6 April 1993 (1993-04-06)
- PATENT ABSTRACTS OF JAPAN vol. 1998, no. 10, 31 August 1998 (1998-08-31) & JP 10 130173 A (JAPAN MEDIC KK), 19 May 1998 (1998-05-19)
- DATABASE WPI Week 32 Derwent Publications Ltd., London, GB; AN 1997-347331 XP002215841 & JP 09 143003 A (HOKKO CHEM CO LTD)
- PATENT ABSTRACTS OF JAPAN vol. 1997, no. 11, 28 November 1997 (1997-11-28) & JP 09 194419 A (KURITA WATER IND LTD), 29 July 1997 (1997-07-29)

## Description

### Field of the Invention

The present invention relates to diester dicarboxylate antimicrobial compositions and methods employing these diester dicarboxylate compositions. The diester dicarboxylate compositions typically contain a diester dicarboxylate having the formula: 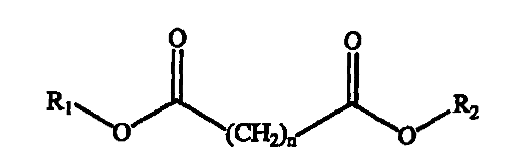 wherein n is 4-8 and R₁ and R₂ are independently C₁ to C₄ alkyl. The diester dicarboxylate antimicrobial compositions can reduce the population of microbes on various surfaces such as facilities, containers, or equipment found in food, beverage, or pharmaceutical industries at temperatures between about -70 **°**C to about 100 **°**C.

### Background of the Invention

There has been a longstanding need for antimicrobial agents having improved antimicrobial efficacy and improved speed of action. The specific requirements for such agents vary according to the intended application (e.g., sanitizer, disinfectant, sterilant, aseptic packaging treatment, etc.) and the applicable public health requirements. Many antimicrobial agents (e.g., iodophors, peracids, hypochlorites, chlorine dioxide, ozone, etc.) have a broad spectrum of antimicrobial properties. However, these agents sometimes have inadequate activity against bacterial spores, fungal spores, and fungi.

This is particularly true under conditions requiring use of low level of such an agent, for example, to minimize corrosion of equipment or packaging, to provide adequate rinsing of a surface, to yield negligible residual antimicrobial agent, to minimize off-gassing of the antimicrobial agent, or to minimize chemical levels in the air. Killing, inactivating, or otherwise reducing the active population of bacterial spores and fungi on surfaces is particularly difficult. This can be particularly troublesome when the spores or fungi are located on surfaces such as food, food contact sites, ware, hospitals and veterinary facilities, surgical implements, and hospital and surgical linens and garments. Control of the mold *Chaetomium funicola,* and of bacterial spore-fonning microorganisms of the *Bacillus* species, can be especially important during food packaging, particularly during cold or hot aseptic filling of food and beverage products.

Agents having greater or faster activity against bacterial spores, fungi, and other resistant microorganisms (particularly microorganisms of the *Bacillus* species) could help meet a substantial public health need, and one that is not adequately addressed by current commonly-used antimicrobial agents.

Chem Pharm. Bull 40 (5) p 1309-1312 (1992) describes the enhancement of bactericidal activity of chlor containing disinfectants with dibasic acid diesters on Staphylococcus aureus after incubation for 484.

EP 0 985 349 discloses a method of heating meat to reduce the microbial population in the product. The anti-microbiol composition comprises a mixture of percarboxylic acid and carboxylic acid.

### Summary of the Invention

The present invention relates to diester dicarboxylate antimicrobial compositions comprising diluting solvent and methods employing these diester dicarboxylate compositions. The diester dicarboxylate compositions typically contain a diester dicarboxylate having the formula: 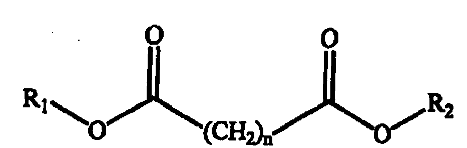 wherein n is 4-8 and R₁ and R₂ are independently C₁ to C₄ alkyl and at least one of peroxycarboxylic acid, aliphatic carboxylic acid, and aromatic carboxylic acid or mixtures thereof. The diester dicarboxylate antimicrobial compositions can reduce the population of microbes on various surfaces such as facilities, containers, or equipment found in food, beverage, or pharmaceutical industries at temperatures between about -70 ° C to about 100 **°** C.

The present invention provides, in one aspect, a method for antimicrobial treatment including applying to microbes a diester dicarboxylate antimicrobial composition. A diester dicarboxylate antimicrobial composition contains a diluting solvent (e.g., water), diester dicarboxylate, and optionally, cosolvent, surfactant, or antimicrobial agent. In another aspect, the invention provides a method for antimicrobial treatment, including applying to microbes a diester dicarboxylate antimicrobial composition, wherein the composition further includes antimicrobial agent. In a preferred embodiment, the antimicrobial agent includes a peroxycarboxylic acid, such as peroxyacetic acid, peroxyoctanoic acid, peroxyformic acid with or without a peroxide such as hydrogen peroxide; a peroxide such as hydrogen peroxide;

The diester dicarboxylate composition of the present invention preferably provides greater than a 1-log order reduction in the population of bacteria or spores of *Bacillus cereus* within 10 seconds at 60° C. In a preferred aspect, the methods and compositions of the invention provide broader spectrum antimicrobial action, providing greater than a 1-log order reduction within 10 seconds at 60° C in one or more organisms such as the mold *Chaetomium funicola.* In a more preferred aspect, the methods and compositions of the invention provide greater than a 1-log order reduction within 10 seconds at 60° C in *Chaetomium funicola, Bacillus subtilis* and *Bacillus cereus.*

In yet another aspect, the invention provides an antimicrobial concentrate and instructions for mixing the concentrate with water, wherein the concentrate includes diester dicarboxylate, an optional cosolvent or surfactant, and an optional antimicrobial agent, the amounts of diester dicarboxylate and optional antimicrobial agent being sufficiently high so that the composition will provide greater than a 1-log order reduction in the population of bacteria or spores of *Bacillus cereus* and/or the mold *Chaetomium funicola* within 10 seconds at 60° C.

The method and compositions of the invention are especially useful for aseptic packaging, pharmaceutical packaging, clean-in-place (CIP) or clean-out-of place (COP) systems, hospital disinfectants, veterinary clinic disinfectants, and as sporicides or sterilants.

### Brief Description of the Figure

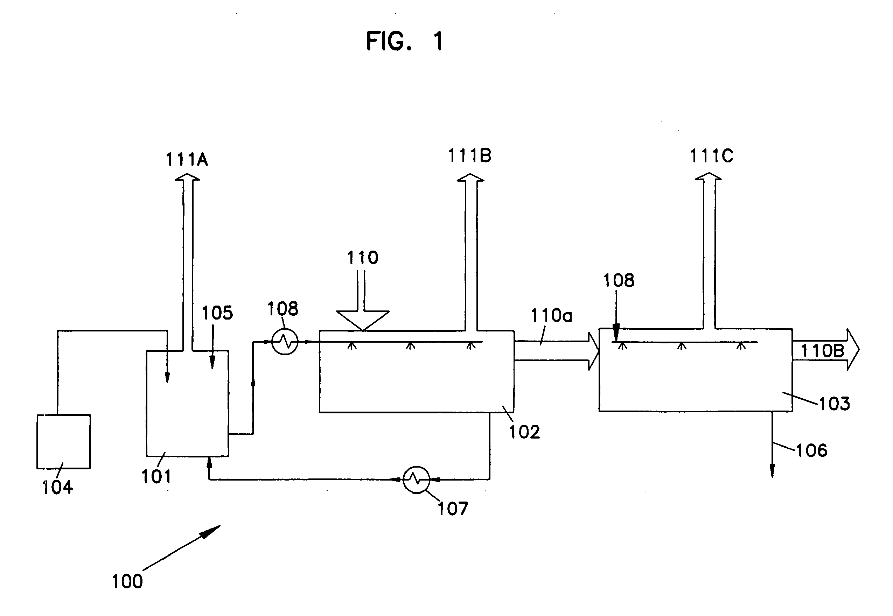

Figure 1 is a diagram of a beverage plant, including a cold aseptic filling plant, in which either carbonated or non-carbonated beverages can be prepared and bottled.

### Detailed Description

### Definitions

As used herein, the term "microorganism" refers to any noncellular or unicellular (including colonial) organism. Microorganisms include all prokaryotes. Microorganisms include bacteria (including cyanobacteria and Mycobacteria), lichens, microfungi, protozoa, virinos, viroids, viruses, and some algae. As used herein, the term "microbe" is synonymous with microorganism.

As used herein, the term "object" refers to a something material that can be perceived by the senses, directly and/or indirectly and that might require treatment with an antimicrobial agent or composition. Objects include a surface, including a hard surface (such as glass, ceramics, metal, natural and synthetic rock, wood, and polymeric), an elastomer or plastic, woven and non-woven substrates, a food processing surface, a health care surface, a pharmaceutical surface, and the like. Objects also include a food product (and its surfaces); a body or stream of water or a gas (e.g., an air stream); and surfaces and articles employed in hospitality and industrial sectors.

As used herein, the phrase "food product" includes any food substance that might require treatment with an antimicrobial agent or composition and that is edible with or without further preparation. Food products include meat (e.g., red meat and pork), seafood, poultry, fruits and vegetables, eggs, living eggs, egg products, ready to eat food, wheat, seeds, roots, tubers, leafs, stems, corms, flowers, sprouts, seasonings, milk and milk products (e.g., yogurt, cheeses), teas, waters, or a combination thereof. The term "produce" refers to food products such as fruits and vegetables and plants or plant-derived materials that are typically sold uncooked, undercooked, or pasteurized, and, often, unpackaged, and that can sometimes be eaten raw (e.g., soy products, teas, yogurts, and juices).

As used herein, the phrase "plant product" includes any plant substance or plant-derived substance that might require treatment with an antimicrobial agent or composition. Plant products include seeds, nuts, nut meats, cut flowers, plants or crops grown or stored in a greenhouse, house plants, and the like. Plant products include many animal feeds.

As used herein, the phrase "meat product" refers to all forms of animal flesh, including the carcass, muscle, fat, organs, skin, bones and body fluids and like components that form the animal.

As used herein, the term "poultry" refers to all forms of any bird kept, harvested, or domesticated for meat or eggs, and including chicken, turkey, ostrich, game hen, squab, guinea fowl, pheasant, quail, duck, goose, emu, or the like and the eggs of these birds.

As used herein, the phrase "food processing surface" refers to a surface of a tool, a package or container, a wrap or film or covering, a machine, equipment, a structure, a building, or the like that is employed as part of a food processing, preparation, or storage activity and that might require treatment with an antimicrobial agent or composition.

As used herein, the phrase "pharmaceutical surfaces" refers to a surface of a tool, a package or container, a wrap or film or covering, a machine, equipment, a structure, a building, or the like that is employed as part of a pharmaceutical processing, preparation, or storage activity and that might require treatment with an antimicrobial agent or composition. As used herein, the phrase "air streams" includes food anti-spoilage air circulation systems and pharmaceutical circulation systems that might require treatment with an antimicrobial agent or composition. Air streams also include air streams typically encountered in hospital, surgical, infirmity, birthing, mortuary, and clinical diagnosis rooms.

As used herein, the term "waters" includes food process or transport waters and pharmaceutical process waters that might require treatment with an antimicrobial agent or composition.

As used herein, the phrase "health care surface" refers to a surface of an instrument, a device, a cart, a cage, furniture, a structure, a building, or the like that is employed as part of a health care activity and that might require treatment with an antimicrobial agent or composition.

As used herein, the term "instrument" refers to the various medical or dental instruments or devices that might require treatment with an antimicrobial agent or composition.

As used herein, weight percent (wt-%), percent by weight, % by weight, and the like are synonyms that refer to the concentration of a substance as the weight of that substance divided by the total weight of the composition and multiplied by 100.

As used herein, the term "active" when applied to a peroxycarboxylic acid or another peroxy containing compound refers to the wt-% of peroxycarboxylic acid or peroxy compound in the composition that can be detected by a suitable analytical technique, for example, by titration, chromatography, spectroscopy, oxidation-reduction probe, amperometrically, or similar peracid detection method..

As used herein, the term "about" modifying the quantity of an ingredient in the compositions of the invention or employed in the methods of the invention refers to variation in the numerical quantity that can occur, for example, through typical measuring and liquid handling procedures used for making concentrates or use solutions in the real world; through inadvertent error in these procedures; through differences in the manufacture, source, or purity of the ingredients employed to make the compositions or carry out the methods; and the like. The term about also encompasses amounts that differ due to different equilibrium conditions for a composition resulting from a particular initial mixture. Whether or not modified by the term "about", the claims include equivalents to the quantities.

Differentiation of antimicrobial "-cidal" or "-static" activity, the definitions which describe the degree of efficacy, and the official laboratory protocols for measuring this efficacy are considerations for understanding the relevance of antimicrobial agents and compositions. Antimicrobial compositions can effect two kinds of microbial cell damage. The first is a lethal, irreversible action resulting in complete microbial cell destruction or incapacitation. The second type of cell damage is reversible, such that if the organism is rendered free of the agent, it can again multiply. The former is termed bacteriocidal and the later, bacteriostatic. A sanitizer and a disinfectant are, by definition, agents which provide antibacterial or bacteriocidal activity. In contrast, a preservative is generally described as an inhibitor or bacteriostatic composition.

For the purpose of this patent application, successful reduction of microorganisms is achieved when the populations of microorganisms are reduced by at least about 0.3-1 log₁₀. In this application, such a population reduction is the minimum acceptable for the processes.

Any increased reduction in population of microorganisms is an added benefit that provides higher levels of protection. For example, as set out in Germicidal and Detergent Sanitizing Action of Disinfectants, Official Methods of Analysis of the Association of Official Analytical Chemists, paragraph 960.09 and applicable sections, 15th Edition, 1990 (EPA Guideline 91-2), a sanitizer should provide a 99.999% reduction (5 log order reduction) within 30 seconds at room temperature, 25±2°C, against several test organisms.

As used herein, the term "sterilant" refers to a physical or chemical agent or process capable of destroying all forms of life (including bacteria, viruses, fungi, and spores) on inanimate surfaces. One procedure is described in *A.O.A.C. Sporicidal Activity of Disinfectants,* Official Methods of Analysis of the Association of Official Analytical Chemists, paragraph 966.04 and applicable sections, 15^{th} Edition, 1990 (EPA Guideline 91-2).

As used herein, the term "antimicrobial composition" refers to a composition having the ability to cause greater than a 90% reduction (1-log order reduction) in the population of bacteria or spores of *Bacillus* species within 10 seconds at 60° C, using the above-mentioned *Germicidal and Detergent Sanitizing Action of Disinfectants* procedure. Preferably, *Bacillus cereus* or *Bacillus subtilis* are used in such procedure.

Also preferably, the antimicrobial compositions of the invention provide greater than a 99% reduction (2-log order reduction), more preferably greater than a 99.99% reduction (4-log order reduction), and most preferably greater than a 99.999% reduction (5-log order reduction) in such population within 10 seconds at 60° C. Preferably, the antimicrobial compositions of the invention also provide greater than a 99% reduction (2-log order reduction), more preferably greater than a 99.99% reduction (4-log order reduction), and most preferably greater than a 99.999% reduction (5-log order reduction) in the population of one or more additional organisms, such as the mold *Chaetomium funicola.* Because in their broadest sense these definitions for antimicrobial activity are different from some of the current governmental regulations, the use in connection with this invention of the term "antimicrobial" is not intended to indicate compliance with any particular governmental standard for antimicrobial activity.

As used herein, the term "sporicide" refers to a physical or chemical agent or process having the ability to cause greater than a 90% reduction (1-log order reduction) in the population of spores of *Bacillus cereus* or *Bacillus subtilis* within 10 seconds at 60° C. Preferably, the sporicidal compositions of the invention provide greater than a 99% reduction (2-log order reduction), more preferably greater than a 99.99% reduction (4-log order reduction), and most preferably greater than a 99.999% reduction (5-log order reduction) in such population within 10 seconds at 60° C.

As used herein, the term "sanitizer" refers to an agent that reduces the number of bacterial contaminants to safe levels as judged by public health requirements. Preferably, sanitizers for use in this invention will provide at least a 99.999% reduction (5-log order reduction) using the *Germicidal and Detergent Sanitizing Action of Disinfectants* procedure referred to above.

As used herein, the term "disinfectant" refers to an agent that kills all vegetative cells including most recognized pathogenic microorganisms, using the procedure described in A.O.A.C. Use Dilution Methods, Official Methods of Analysis of the Association of Official Analytical Chemists, paragraph 955.14 and applicable sections, 15th Edition, 1990 (EPA Guideline 91-2).

As used herein, the term "preservative" refers to an agent that extends the storage life of food and non-food products by retarding or preventing deterioration of flavor, odor, color, texture, appearance, nutritive value, or safety. A preservative need not provide a lethal, irreversible action resulting in partial or complete microbial cell destruction or incapacitation.

### Diester Dicarboxylate Antimicrobial Compositions

The present invention relates to antimicrobial compositions containing diester dicarboxylates. A first solvent is present in a major portion, and a diester dicarboxylate in a minor portion. The diester dicarboxylate is typically insoluble or only sparingly soluble in the first solvent. Preferably, the first solvent includes or is a diluting solvent Preferred diester dicarboxylates include dimethyl adipate, methyl ethyl adipate, dimethyl pimelate, methyl ethyl pimelate, dimethyl suberate, methyl ethyl suberate, dimethyl sebacate, methyl ethyl sebacate, diethyl adipate, diethyl pimelate, diethyl suberate, diethyl sebacate, and mixtures thereof. Preferred diluting solvents include water. The diester dicarboxylate antimicrobial compositions can also include antimicrobial agent, stabilizer, wetting agent, chelant, buffering agent, cosolvent, hydrotrope, surfactant, or mixtures thereof

Typically, the antimicrobial composition includes one or more antimicrobial agents in addition to diester dicarboxylate. The antimicrobial agent can be selected to be more soluble in the first solvent or in the diester dicarboxylate. While not a requirement of the present invention, preferably, the antimicrobial agent is more soluble in the diester dicarboxylate compared to the diluting solvent Preferably, the antimicrobial agent preferentially dissolves, disperses, or migrates into the diester dicarboxylate in preference to the diluting solvent. For example, although not limiting to the present invention, it is believed that antimicrobial agents that can be uncharged in liquid compositions or that have more than 6 carbon atoms will preferentially partition into the diester dicarboxylate compared to the diluting solvent. Antimicrobial agents having more than two carbon atoms will typically partially partition into the diester dicarboxylate compared to the diluting solvent

The antimicrobial agents comprises at least one of peroxycarboxylic acids. and organic acidifying agents, selected from aliphatic and aromatic carboxylic acids. Such preferred antimicrobial agents are described in additional detail hereinbelow.

In a preferred embodiment, the diester dicarboxylate composition reduces the population of one or more microorganisms on food packaging, such as aseptic food or beverage, on pharmaceutical, packaging, on a health care surface, or in a health care environment.

For example, a preferred diester dicarboxylate antimicrobial composition of the present invention is effective for killing one or more of the pathogenic or contaminating spore-forming bacteria or fungi associated with foods, beverages, pharmaceuticals, or their packaging or containers. Such fungi or bacteria include *Zygosaccharomyces bailii, Bacillus cereus, Bacillus subtilis,* and molds including *Chaetomium spp.,* e.g., *Chaetomium funicola, Arthrinium,* and like genera; yeast, other molds, and the like. The compositions and methods of the present invention have activity against a wide variety of microorganisms such as Gram positive (for example, *Listeria monocytogenes)* and Gram negative (for example, *Escherichia coli)* bacteria, mycobacteria (such as that leading to tuberculosis), yeast, molds, bacterial spores, viruses, etc. The compositions and methods of the present invention, as described above, have activity against a wide variety of human pathogens including *Staphylococcus aureus, Pseudomonas aeruginosa.* The compositions and methods can kill a wide variety of microorganisms on a food, beverage, or pharmaceutical processing surface or equipment.

By way of further example, a preferred antimicrobial diester dicarboxylate composition of the present invention is effective for killing one or more of the food-borne pathogenic bacteria associated with a food product, such as *Salmonella typhimurium, Salmonella javiana, Campylobacter jejuni, Listeria monocytogenes,* and *Escherichia coli* O157:H7, yeast, mold and the like. The compositions and methods of the present invention, as described above, have activity against a wide variety of human pathogens. The compositions and methods can kill a wide variety of microorganisms on a food processing surface, on the surface of a food product, or in water used for washing or processing of food product.

The preferred compositions include concentrate compositions and use compositions. The diester dicarboxylate antimicrobial compositions can be made and/or supplied as concentrates that are used as is or diluted with additional, or another, diluting solvent. The diester dicarboxylate antimicrobial compositions will likely be made and used as a use solution; either from the aforementioned concentrates or from individual raw materials. For example, a use composition can be made at the point of use from individual ingredients or from a concentrate mixture. For example, a diester dicarboxylate antimicrobial composition can be used as is or mixed with a diluting solvent or gas. Water is a preferred diluting solvent. Preferred diluting gasses include carbon dioxide, nitrogen, oxygen, air, or mixtures thereof. Typically, an antimicrobial concentrate composition can be diluted with a solvent, gas, or steam, for example with water, to form an antimicrobial use composition. In a preferred embodiment, the concentrate composition is diluted into water employed for washing or processing a food, beverage, or pharmaceutical, or a container or equipment employed in producing foods, beverages, or pharmaceuticals, or for filling food or beverage or pharmaceutical containers.

Preferred methods of the present invention include some form of mixing, particularly as a concentrate is, or individual ingredients are, added to water to make the use composition. Mixing can occur as a separate step or as part of applying use composition to an object. Preferred methods for mixing and/or applying include agitating, dipping, immersing, flooding, aspirating, pumping, spraying, fogging, annular misting or spraying, or sonicating. Preferred methods include water systems that have some agitation, spraying, fogging, re-circulation, or other mixing of the solution.

### Ranges of Ingredients for Certain Embodiments of Diester Dicarboxylate Antimicrobial Compositions

Typical diester dicarboxylate antimicrobial compositions include about 0.001 wt-% to about 95 wt-% diester dicarboxylate, about 5 wt-% to about 99.999 wt-% diluting solvent, and, optionally, about 0.001 wt-% to about 65 wt-% antimicrobial agent. Preferred diester dicarboxylate antimicrobial compositions include about 0.01 wt-% to about 60 wt-% diester dicarboxylate, about 50 wt-% to about 99.8 wt-% diluting solvent, and, optionally, about 0.01 wt-% to about 25 wt-% antimicrobial agent. Preferred diester dicarboxylate antimicrobial compositions include about 0.1 wt-% to about 15 wt-% diester dicarboxylate, about 60 wt-% to about 99.5 wt-% diluting solvent, and, optionally, about 0.1 wt-% to about 15 wt-% antimicrobial agent. These compositions can also include one or more of stabilizers, catalysts, buffers, acidulants, and the like. These compositions can include the stated amounts or ranges not modified by about.

Preferred concentrate diester dicarboxylate antimicrobial compositions include about 10 wt-% to about 50 wt-% diester dicarboxylate, about 10 wt-% to about 80 wt-% diluting solvent, and, optionally, about 2.5 wt-% to about 25 wt-% antimicrobial agent. These concentrate compositions can also include one or more of stabilizer, catalyst, buffer, acidulant, and the like. These concentrate compositions can include the stated amounts or ranges not modified by about.

Typically, for use, diester dicarboxylate antimicrobial compositions include about 0.001 wt-% to about 20 wt-% diester dicarboxylate, about 80 wt-% to about 99.999 wt-% diluting solvent, and, optionally, about 0.001 wt-% to about 10 wt-% antimicrobial agent. Preferred diester dicarboxylate antimicrobial use compositions include about 0.01 wt-% to about 10 wt-% diester dicarboxylate, about 85 wt-% to about 99.8 wt-% diluting solvent, and, optionally, about 0.01 wt-% to about 5 wt-% antimicrobial agent. Preferred diester dicarboxylate antimicrobial use compositions include about 0.1 wt-% to about 5 wt-% diester dicarboxylate, about 93 wt-% to about 99.9 wt-% diluting solvent, and, optionally, about 0.08 wt-% to about 2.5 wt-% antimicrobial agent. These use compositions can also include one or more of stabilizer, catalyst, buffer, acidulant, and the like. These use compositions can include the stated amounts or ranges not modified by about.

Typical diester dicarboxylate antimicrobial compositions can include about 0.1 wt-% to about 60 wt-% diester dicarboxylate, about 10 wt-% to about 99.999 wt-% diluting solvent, and about 0.0025 wt-% to about 30 wt-% antimicrobial agent. Preferred diester dicarboxylate antimicrobial compositions can include about 0.1 wt-% to about 20 wt-% diester dicarboxylate, about 30 wt-% to about 99.99 wt-% diluting solvent, and about 0.007 wt-% to about 3 wt-% antimicrobial agent. Preferred diester dicarboxylate antimicrobial compositions can include about 0.25 wt-% to about 15 wt-% diester dicarboxylate, about 90 wt-% to about 99 wt-% diluting solvent, and about 0.01 wt-% to about 6 wt-% antimicrobial agent. Preferred diester dicarboxylate antimicrobial compositions can include about 0.5 wt-% to about 6 wt-% diester dicarboxylate, about 95 wt-% to about 99 wt-% diluting solvent, and about 0.025 wt-% to about 3 wt-% antimicrobial agent.

Typical diester dicarboxylate antimicrobial compositions can include about 0.1 wt-% to about 60 wt-% diester dicarboxylate, preferably about 0.3 wt-% to about 20 wt-% diester dicarboxylate, preferably about 0.5 wt-% to about 15 wt-% diester dicarboxylate, preferably about 1 wt-% to about 6 wt-% diester dicarboxylate. Preferred diester dicarboxylates include dimethyl suberate. Typical diester dicarboxylate antimicrobial compositions can include about 10 wt-% to about 99.999 wt-% diluting solvent, preferably about 30 wt-% to about 99.99 wt-% diluting solvent, preferably about 90 wt-% to about 99 wt-% diluting solvent, preferably about 95 wt-% to about 99 wt-% diluting solvent. Preferred diluting solvents include water. Typical diester dicarboxylate antimicrobial compositions can include about 0.0025 wt-% to about 30 wt-% antimicrobial agent, preferably about 0.007 wt-% to about 3 wt-% antimicrobial agent, preferably about 0.01 wt-% to about 6 wt-% antimicrobial agent, preferably about 0.025 wt-% to about 3 wt-% antimicrobial agent.

Certain embodiments of the diester dicarboxylate antimicrobial compositions include the ranges of ingredients in this table:

| | **Diester Dicarboxylate** | **Diluting Solvent** | **Antimicrobial Agent** |
|---|---|---|---|
| **Use Compositions** | | | |
| **Typical** | 0.001-20 | 80-99.999 | 0.001-10 |
| **Preferred** | 0.01-10 | 85-99.99 | 0.01-5 |
| **More preferred** | 0.08-5 | 92.5-99.9 | 0.1-2.5 |
| **Concentrates** | | | |
| **Typical** | 0.1-99.9 | 5-99 | 1-60 |
| **Preferred** | 1-60 | 5-95 | 1-40 |
| **More Preferred** | 10-50 | 10-80 | 2.5-25 |

### Ranges for Certain Embodiments of Diester Dicarboxylate Compositions Including Peroxycarboxylic Acids

Preferred diester dicarboxylate antimicrobial compositions can include about 0.01 wt-% to about 95 wt-% diester dicarboxylate, about 5 wt-% to about 99.999 wt-% water, and about 0.01 wt-% to about 35 wt-% peroxycarboxylic acid. Such preferred compositions can also include 0.01 wt-% to about 75 wt-% hydrogen peroxide and, optionally, about 0.00001 wt-% to about 5 wt-% stabilizer or catalyst, about 0.001 wt-% to about 10 wt-% surfactant, and/or about 0.001 wt-% to about 10 wt-% buffer. Preferred diester dicarboxylate antimicrobial compositions include about 0.1 wt-% to about 90 wt-% diester dicarboxylate, about 10 wt-% to about 99.9 wt-% water, and about 0.05 wt-% to about 15 wt-% peroxycarboxylic acid. Such preferred compositions can also include 0.03 wt-% to about 65 wt-% hydrogen peroxide and, optionally, about 0.01 wt-% to about 3 wt-% stabilizer or catalyst, about 0.01 wt-% to about 5 wt-% surfactant, and/or about 0.01 wt-% to about 5 wt-% buffer. Preferred diester dicarboxylate antimicrobial compositions include about 0.2 wt-% to about 65 wt-% diester dicarboxylate, about 35 wt-% to about 99.2 wt-% water, and about 0.08 wt-% to about 11 wt-% peroxycarboxylic acid. Such preferred compositions can also include 0.05 wt-% to about 55 wt-% hydrogen peroxide and, optionally, about 0.1 wt-% to about 2 wt-% stabilizer or catalyst, about 0.1 wt-% to about 2 wt-% surfactant, and/or about 0.1 wt-% to about 2 wt-% buffer. These compositions can include the stated amounts or ranges not modified by about.

Preferred concentrate diester dicarboxylate antimicrobial compositions include about 10 wt-% to about 50 wt-% diester dicarboxylate, about 10 wt-% to about 80 wt-% water, and about 2.5 wt-% to about 11 wt-% peroxycarboxylic acid. Such preferred concentrate compositions can also include about 1 wt-% to about 2 wt-% stabilizer or catalyst, about 1 wt-% to about 2 wt-% surfactant, and/or about 1 wt-% to about 2 wt-% buffer. These concentrate compositions can include the stated amounts or ranges not modified by about.

Preferably, for use, diester dicarboxylate antimicrobial compositions can include about 0.001 wt-% to about 20 wt-% diester dicarboxylate, about 80 wt-% to about 99.99 wt-% water, and about 0.01 wt-% to about 10 wt-% peroxycarboxylic acid. Such preferred use compositions can also include 0.003 wt-% to about 25 wt-% hydrogen peroxide and, optionally, about 0.001 wt-% to about 5 wt-% stabilizer or catalyst, about 0.001 wt-% to about 10 wt-% surfactant, and/or about 0.001 wt-% to about 10 wt-% buffer. Preferred diester dicarboxylate antimicrobial use compositions include about 0.1 wt-% to about 10 wt-% diester dicarboxylate, about 85 wt-% to about 99.99 wt-% water, and about 0.01 wt-% to about 5 wt-% peroxycarboxylic acid. Such preferred use compositions can also include 0.03 wt-% to about 20 wt-% hydrogen peroxide and, optionally, about 0.001 wt-% to about 3 wt-% stabilizer or catalyst, about 0.001 wt-% to about 5 wt-% surfactant, and/or about 0.001 wt-% to about 5 wt-% buffer. Preferred diester dicarboxylate antimicrobial use compositions include about 0.1 wt-% to about 5 wt-% diester dicarboxylate, about 93 wt-% to about 99.9 wt-% water, and about 0.08 wt-% to about 2.5 wt-% peroxycarboxylic acid. Such preferred use compositions can also include 0.08 wt-% to about 10 wt-% hydrogen peroxide and, optionally, about 0.01 wt-% to about 2 wt-% stabilizer or catalyst, about 0.01 wt-% to about 2 wt-% surfactant, and/or about 0.01 wt-% to about 2 wt-% buffer. These use compositions can include the stated amounts or ranges not modified by about.

For example, the diester dicarboxylate antimicrobial composition can include up to 95 wt-% diester dicarboxylate, up to 35 wt-% active peroxycarboxylic acid, up to 75 wt-% hydrogen peroxide, up to 99.99 wt-% water, plus optional additives. Preferably, the diester dicarboxylate antimicrobial composition includes up to 65 wt-% diester dicarboxylate, up to 15 wt-% active peroxycarboxylic acid, up to 45 wt-% hydrogen peroxide, up to 99.5 wt-% water, plus optional additives. Preferably the diester dicarboxylate antimicrobial composition includes up to 45 wt-% diester dicarboxylate, up to 10 wt-% active peroxycarboxylic acid, up to 15 wt-% hydrogen peroxide, up to 99 wt-% water, plus optional additives. These compositions can include the stated amounts or ranges not modified by about.

For example, for use, the diester dicarboxylate antimicrobial composition can include up to 20 wt-% diester dicarboxylate, up to 10 wt-% active peroxycarboxylic acid, up to 60 wt-% hydrogen peroxide, up to 99.99 wt-% water, plus optional additives. Preferably, the diester dicarboxylate antimicrobial use composition includes up to 10 wt-% diester dicarboxylate, up to 5 wt-% active peroxycarboxylic acid, up to 20 wt-% hydrogen peroxide, up to 99.5 wt-% water, plus optional additives. Preferably the diester dicarboxylate antimicrobial use composition includes up to 5 wt-% diester dicarboxylate, up to 2.5 wt-% active peroxycarboxylic acid, up to 10 wt-% hydrogen peroxide, up to 99 wt-% water, plus optional additives. These use compositions can also include one or more of stabilizer, catalyst, buffer, acidulant, and the like. These compositions can include the stated amounts or ranges not modified by about.

For example, the diester dicarboxylate antimicrobial use composition can include about 0.001 wt-% to about 95 wt-% diester dicarboxylate, preferably about 0.05 wt-% to about 5 wt-% diester dicarboxylate, more preferably about 0.1 wt-% to about 3 wt-% diester dicarboxylate. For example, the diester dicarboxylate antimicrobial use composition can include about 0.01 wt-% to about 35 wt-% active peroxycarboxylic acid, preferably about 0.05 wt-% to about 5 wt-% active peroxycarboxylic acid, more preferably about 0.08 wt-% to about 2.5 wt-% active peroxycarboxylic acid. For example, the diester dicarboxylate antimicrobial composition can include about 0.01 wt-% to about 25 wt-% hydrogen peroxide, preferably about 0.05 wt-% to about 5 wt-% hydrogen peroxide, more preferably about 0.1 wt-% to about 3 wt-% hydrogen peroxide. For example, the diester dicarboxylate antimicrobial use composition can include about 0.001 wt-% to about 15 wt-% stabilizer, preferably about 0.01 wt-% to about 3 wt-% stabilizer, more preferably about 0.1 wt-% to about 2 wt-% stabilizer. For example, the diester dicarboxylate antimicrobial composition can include about 0.001 wt-% to about 10 wt-% buffering agents, preferably about 0.01 to about 5 wt-% buffering agents, more preferably about 0.1 wt-% to about 2 wt-% buffering agents. For example, the diester dicarboxylate antimicrobial use composition can include about 50 to about 99.999 wt-% water, preferably about 70 to about 99.8 wt-% water, more preferably about 85 to about 99.5 wt-% water. These compositions can include the stated amounts or ranges not modified by about.

### Ranges for Certain Embodiments of Diester Dicarboxylate Compositions Including Carboxylic Acids

Employing carboxylic acid antimicrobial agents, typical diester dicarboxylate antimicrobial compositions can include about 0.001 wt-% to about 99.9 wt-% diester dicarboxylate, about 1 wt-% to about 99.999 wt-% diluting solvent, and about 0.001 wt-% to about 85 wt-% carboxylic acid antimicrobial agent. For example, a preferred diester dicarboxylate antimicrobial composition can include about 0.1 wt-% to about 95 wt-% diester dicarboxylate, about 5 wt-% to about 99.9 wt-% diluting solvent, and about 0.001 wt-% to about 25 wt-% carboxylic acid antimicrobial agent. For example, the diester dicarboxylate antimicrobial composition can include about 0.001 wt-% to about 15 wt-% diester dicarboxylate, about 70 wt-% to about 99.9 wt-% water, and about 0.01 wt-% to about 10 wt-% carboxylic acid. Such compositions can optionally include up to about 30 wt-% of additives such as acidulants, buffers, co-solvents, surfactants, and the like. The compositions can include the stated amounts or ranges not modified by about.

Employing carboxylic acid antimicrobial agents, preferred concentrate diester dicarboxylate antimicrobial composition can include about 10 wt-% to about 50 wt-% diester dicarboxylate, about 10 wt-% to about 80 wt-% water, and about 2.5 wt-% to about 25 wt-% carboxylic acid. Such concentrate compositions can optionally include up to about 30 wt-% of additives such as acidulants, buffers, co-solvents, surfactants, and the like. The compositions can include the stated amounts or ranges not modified by about.

Employing carboxylic acid antimicrobial agents, typical diester dicarboxylate antimicrobial use compositions can include about 0.001 wt-% to about 20 wt-% diester dicarboxylate, about 80 wt-% to about 99.999 wt-% diluting solvent, and about 0.001 wt-% to about 10 wt-% carboxylic acid antimicrobial agent. For example, a preferred diester dicarboxylate antimicrobial use composition can include about 0.01 wt-% to about 10 wt-% diester dicarboxylate, about 85 wt-% to about 99.99 wt-% diluting solvent, and about 0.01 wt-% to about 5 wt-% carboxylic acid antimicrobial agent. For example, the diester dicarboxylate antimicrobial use composition can include about 0.1 wt-% to about 5 wt-% diester dicarboxylate, about 93 wt-% to about 99.9 wt-% water, and about 0.08 wt-% to about 2.5 wt-% carboxylic acid. Such compositions can optionally include up to about 30 wt-% of additives such as acidulants, buffers, co-solvents, surfactants, and the like. The compositions can include the stated amounts or ranges not modified by about.

### Diluting Solvent

A variety of fluids can be used as the diluting solvent, including water (e.g. liquid water, ice, or steam); condensed gases and other sub- or supercritical fluids (e.g., CO₂); perchloroethylene; oils such as silicone oils (e.g., siloxanes), gear oils, transaxle oils, mineral oils or vegetable oils; and carboxylic esters such as methyl soyate; glycols; organic acids; peroxides; and inorganic acids. Mixtures of diluting solvents can be used if desired. Especially useful oils include food grade or food-derived oils, flavorings, or fragrance oils. Preferred diester dicarboxylate antimicrobial compositions can include water, glycols, CO₂, organic acids, peroxides, and inorganic acids as diluting solvent, more preferably water, glycols, and organic acids as diluting solvent, more preferably water as diluting solvent.

Preferably, the diluting solvent includes water, consists essentially of water, or consists of water, in its liquid or vapor forms, preferably in its liquid form. The remainder of this specification will primarily discuss the use of water in its liquid form as the diluting solvent, it being understood that other suitable fluids could be added to or substituted for water in its liquid form if desired.

Typical diester dicarboxylate antimicrobial compositions can include from about 5 wt-% to about 99.999 wt-% diluting solvent, preferably about 50 wt-% to about 99.99 wt-% diluting solvent, preferably about 75 wt-% to about 99.9 wt-% diluting solvent, and preferably about 85 wt-% to about 99.5 wt-% diluting solvent. Concentrate diester dicarboxylate antimicrobial compositions preferably include from about 10 wt-% to about 80 wt-% diluting solvent. Typically, for use, diester dicarboxylate antimicrobial compositions can include from about 80 wt-% to about 99.999 wt-% diluting solvent, preferably about 85 wt-% to about 99.99 wt-% diluting solvent, preferably about 92.5 wt-% to about 99.9 wt-% diluting solvent. These compositions can include the stated amounts or ranges not modified by about.

### Diester Dicarboxylates

As used herein, diester dicarboxylate refers to molecules having the formula: 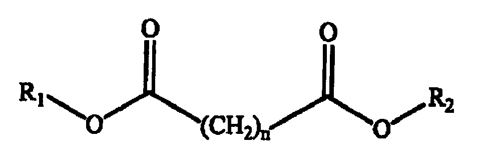 where n is 4-8 and R₁ and R₂ are independently C₁ to C₄ alkyl. The alkyl group can be either straight chain or branched, preferably straight chain.

Surprisingly, diester dicarboxylate antimicrobial compositions including certain diester dicarboxylates show greater activity than compositions of certain other diester dicarboxylates. In particular, diester dicarboxylates derived from carboxylic acids having two carboxyl groups separated by 2 to 8 carbon atoms show greater antimicrobial activity. Preferred diester dicarboxylates are derived from carboxylic acids having two carboxyl groups separated by 4, 5, 6, or 8 carbon atoms, preferably 6 carbon atoms. Such preferred diester dicarboxylates include diesters of adipic acid, glutaric acid, pimelic acid, suberic acid, or sebacic; preferably of adipic acid, pimelic acid, or suberic acid; more preferably of suberic acid or adipic acid.

In particular, diester dicarboxylates derived from alcohols having 1 to 2 carbon atoms show greater antimicrobial activity, particularly when the dicarboxylic moiety has 4 to 8 carbons. Preferred diester dicarboxylates are derived from alcohols having 1, 2, 3, or 4 carbon atoms, preferably 1 or 2 carbon atoms, preferably 1 carbon atom. Such preferred diester dicarboxylates include diesters of adipic, glutaric, succinic, pimelic, suberic, or sebacic acids. The esters can be symmetrical or mixed esters of methanol, ethanol, propanol, isopropanol, butanol, sec-butanol, or t-butenol; preferably methanol, ethanol, or iso-butanol; more preferably methanol or ethanol; more preferably methanol.

In particular, diester dicarboxylates having a total of 5 to 18 carbon atoms show greater antimicrobial activity. Preferred diester dicarboxylates have 6 to 12 carbon atoms, preferably 8 to 10 carbon atoms, and more preferably 9 or 10 carbon atoms. Such preferred diester dicarboxylates include methyl and ethyl diesters of adipic acid, glutaric acid, pimelic acid, suberic acid, or mixtures thereof; preferably esters of adipic acid, pimelic acid, suberic acid or mixtures thereof; preferably esters of pimelic acid, suberic acid, or mixtures thereof.

Preferred alkyl diester dicarboxylates include dimethyl malonate, methyl ethyl malonate, methyl propyl malonate, methyl butyl malonate, dimethyl succinate, methyl ethyl succinate, methyl propyl succinate, methyl butyl succinate, dimethyl glutarate, methyl ethyl glutarate, methyl propyl glutarate, methyl butyl glutarate, dimethyl adipate, methyl ethyl adipate, methyl propyl adipate, methyl butyl adipate, dimethyl pimelate, methyl ethyl pimelate, methyl propyl pimelate, methyl butyl pimelate, dimethyl suberate, methyl ethyl suberate, methyl propyl suberate, methyl butyl suberate, dimethyl sebacate, methyl ethyl sebacate, methyl propyl sebacate, methyl butyl sebacate, diethyl malonate, ethyl propyl malonate, ethyl butyl malonate, diethyl succinate, ethyl propyl succinate, ethyl butyl succinate, diethyl glutarate, ethyl propyl glutarate, ethyl butyl glutarate, diethyl adipate, ethyl propyl adipate, ethyl butyl adipate, diethyl pimelate, ethyl propyl pimelate, ethyl butyl pimelate, diethyl suberate, ethyl propyl suberate, ethyl butyl suberate, diethyl sebacate, ethyl propyl sebacate, ethyl butyl sebacate, dipropyl malonate, propyl butyl malonate, dipropyl succinate, propyl butyl succinate, dipropyl glutarate, propyl butyl glutarate, dipropyl adipate, propyl butyl adipate, dipropyl pimelate, propyl butyl pimelate, dipropyl suberate, propyl butyl suberate, dipropyl sebacate, propyl butyl sebacate, dibutyl malonate, dibutyl succinate, dibutyl glutarate, dibutyl adipate, dibutyl pimelate, dibutyl suberate, and dibutyl sebacate. In these esters propyl can be n- or iso-propyl; butyl can be n-, iso-, or tert-butyl; or a mixture thereof.

More preferred alkyl diester dicarboxylates include dimethyl adipate, methyl ethyl adipate, dimethyl pimelate, methyl ethyl pimelate, dimethyl suberate, methyl ethyl suberate, dimethyl sebacate, methyl ethyl sebacate, diethyl adipate, diethyl pimelate, diethyl suberate, and diethyl sebacate.

Diester dicarboxylates, such as dioctyl sebacate, bis-[2-ethylhexyl] sebacate, diamyl sebacate, dimethyl pimelate, and dimethyl suberate, are commercially available in relatively pure form. These sebacate esters are preferred, in part, since they are commercially and economically available.

Typical diester dicarboxylate antimicrobial compositions as use or concentrate compositions or as mixed from individual ingredients at the point of use, can include about 0.001 wt-% to about 85 wt-% diester dicarboxylate, preferably about 0.05 wt-% to about 5 wt-% diester dicarboxylate, more preferably about 0.1 wt-% to about 3 wt-% diester dicarboxylate. Typical concentrate diester dicarboxylate antimicrobial compositions can include about 10 wt-% to about 50 wt-% diester dicarboxylate. Typically, for use, diester dicarboxylate antimicrobial compositions can include about 0.001 wt-% to about 50 wt-% diester dicarboxylate, preferably about 0.01 wt-% to about 10 wt-% diester dicarboxylate, more preferably about 0.08 wt-% to about 5 wt-% diester dicarboxylate. These compositions can include the stated amounts or ranges not modified by about.

### Antimicrobial Agent

The antimicrobial compositions of the invention contain as antimicrobial agents. peroxycarboxylic acids including peroxyacetic acid, peroxyformic acid, peroxyoctanoic acid, and monoester peroxy dicarboxylic acids and/or

Organic acidifying antimicrobial agents selected from aliphatic and aromatic carboxylic acids. Preferred aliphatic or aromatic carboxylic acids include formic acid, acetic acid, propionic acid, heptanoic acid, octanoic acid, nonanoic acid, decanoic acid, benzoic acid, salicylic acid, and mixtures thereof.

The antimicrobial agent can be dissolved or dispersed in the diester dicarboxylate or in the diluting solvent or can be selected to be more soluble in the first solvent or in the diester dicarboxylate. Diester dicarboxylate antimicrobial compositions of the invention containing antimicrobial agent typically have substantially greater antimicrobial effectiveness than comparison aqueous solutions or dispersions containing the antimicrobial agent alone. Although not limiting to the present invention, it is believed that this might arise due to partitioning of the antimicrobial agent preferentially into one of the solvents. Preferably, the antimicrobial agent is more soluble in or preferentially dissolves, disperses, or migrates into the diester dicarboxylate compared to the diluting solvent. It is believed, without limiting the present invention, that an antimicrobial agent that is uncharged in the diester dicarboxylate composition or that has more than 6 atoms including two carbon atoms will in part partition into the diester dicarboxylate.

Typical diester dicarboxylate antimicrobial compositions can include from about 0.001 wt-% to about 60 wt-% antimicrobial agent, preferably about 0.01 wt-% to about 15 wt-% antimicrobial agent, preferably about 0.08 wt% to about 2.5 wt-% antimicrobial agent. Typical concentrate diester dicarboxylate antimicrobial compositions can include from about 2.5 wt-% to about 25 wt-% antimicrobial agent. Typically, for use, diester dicarboxylate antimicrobial compositions can include from about 0.001 wt-% to about 20 wt-% antimicrobial agent, preferably about 0.01 wt-% to about 10 wt-% antimicrobial agent, preferably about 0.08 wt-% to about 5 wt-% antimicrobial agent Preferred diester dicarboxylate antimicrobial compositions can include about 0.05, about 0.1, about 0.2, about 0.3, about 0.4, about 0.5, about 0.6, about 0.7, about 0.8, about 0.9, about 1, about 1.1, about 1.2, about 1.3, about 1.4, about 1.5, about 1.6, about 1.7, about 1.8, about 1.9, about 2, about 2.1, about 2.2, about 2.3, about 2.4, about 2.5, about 2.6, about 2.7, about 2.8, about 2.9, about 3.0, about 3.1, about 3.2 , about 3.3, about 3.4, about 3.5, about 3.6, about 3.7, about 3.8, about 3.9, about 4.0, about 4.1, about 4.2, about 4.3, about 4.4, about 4.5, about 4.6, about 4.7, about 4.8, about 4.9, or about 5.0 wt-% antimicrobial agent. These compositions can include the stated amounts or ranges not modified by about.

The level of reactive antimicrobial agent, such as peroxy acid, hydrogen peroxide, or halogen containing antimicrobial agent in a use composition can be affected, typically diminished, by organic matter that is found in or added to the use composition. Thus, the amounts of ingredients listed for the use compositions refer to the composition before or early in use, with the understanding that the amounts will diminish as organic matter is added to the use composition.

### Peroxycarboxylic Acid Antimicrobial Agents

Diester dicarboxylate antimicrobial compositions of the present invention can include as an antimicrobial agent a peroxycarboxylic acid and/or a carboxylic acid. Generally, carboxylic acids have the formula R-COOH wherein the R can represent any number of different groups including aliphatic groups, alicyclic groups, aromatic groups, heterocyclic groups, and ester groups, such as alkyl ester groups, all of which can be saturated or unsaturated and/or substituted or unsubstituted. Preferably R is a small alkyl group with 1-10 carbons, most preferably 1-8 carbons.

Carboxylic acids which are generally useful are those having one or two carboxyl groups where the R group is a primary alkyl or aryl chain having a length of C₂ to C₁₂. The primary alkyl or aryl chain is that carbon chain of the molecule having the greatest length of carbon atoms and directly appending carboxyl functional groups. Examples of suitable carboxylic acids include acetic acid, propionic acid, hexanoic acid, heptanoic acid, octanoic acid, nonanoic acid, decanoic acid, benzoic acid, salicylic acid, and mixtures thereof. Longer chain carboxylic acid analogues, including hexanoic, heptanoic, octanoic, nonanoic, and decanoic, can be additionally antimicrobial and reduce surface tension to assist in wetting of hydrophobic surfaces.

Peroxycarboxylic (or percarboxylic) acids generally have the formula R(CO₃H)ₙ, where R is an alkyl, arylalkyl, cycloalkyl, carboxy alkyl, carboxyester alkyl, aromatic, or heterocyclic; and n is one, two, or three, and named by prefixing the parent acid with peroxy. While peroxycarboxylic acids are not as stable as carboxylic acids, their stability generally increases with increasing molecular weight. Thermal decomposition of these acids can generally proceed by free radical and nonradical paths, by photodecomposition or radical-induced decomposition, or by the action of metal ions or complexes. Percarboxylic acids can be made by the direct, acid catalyzed equilibrium action of hydrogen peroxide with the carboxylic acid, by autoxidation of aldehydes, or from acid chlorides, and hydrides, or carboxylic anhydrides with hydrogen or sodium peroxide.

Peroxycarboxylic acids useful in the compositions and methods of the present invention include peroxyformic, peroxyacetic, peroxypropionic, peroxybutanoic, peroxypentanoic, peroxyhexanoic, peroxyheptanoic, peroxyoctanoic, peroxynonanoic, peroxydecanoic, peroxyundecanoic, peroxydodecanoic, peroxylactic, peroxycitric, peroxymaleic, peroxyascorbic, peroxyhydroxyacetic (peroxyglycolic), peroxyoxalic, peroxymalonic, peroxysuccinic, peroxyglutaric, peroxyadipic, peroxypimelic and peroxysuberic acid and mixtures thereof.

Peroxy forms of carboxylic acids with more than one carboxylate moiety can have one or more of the carboxyl moieties present as peroxycarboxyl moieties. These peroxycarboxylic acids have been found to provide good antimicrobial action with good stability in aqueous mixtures. In a preferred embodiment, the composition of the invention utilizes a combination of several different peroxycarboxylic acids. In a preferred embodiment, the antimicrobial composition includes a peroxycarboxylic acid having 2 carbon atoms and another having from 7 to 12 carbon atoms. Preferably, such an antimicrobial composition includes peroxyacetic acid and peroxyoctanoic acid, peroxydecanoic acid, or mixtures thereof.

Typical diester dicarboxylate antimicrobial compositions include C₂ to C₁₀ peroxy carboxylic acid. Preferred diester dicarboxylate antimicrobial compositions include peroxyacetic acid, peroxyheptanoic acid, peroxyoctanoic acid, peroxypropionic acid, or mixtures thereof as peroxycarboxylic acid. Preferred diester dicarboxylate antimicrobial compositions include peroxyacetic acid, peroxyheptanoic acid, peroxyoctanoic acid, or mixtures thereof as peroxycarboxylic acid.

The amount of peroxycarboxylic acid in use and concentrate compositions can range up to the limits at which the peroxycarboxylic acid can be dissolved or suspended in the composition. Preferably, the peroxycarboxylic acid is present in concentrate compositions at concentrations of from about 0.001 to about 50% by weight, preferably from 0.05 to about 25% by weight, preferably from about 0.08 to about 15% by weight, preferably from about 0.1 to about 10% by weight. In certain preferred embodiments the diester dicarboxylate concentrate composition contains peroxycarboxylic acid at amounts at the lower end of these ranges. These compositions can include the stated amounts or ranges not modified by about.

Use compositions can be made, for example, by diluting a concentrate or by mixing individual ingredients at the point of use. Typically use solutions of the above concentrate compositions include, independently, peroxycarboxylic acid at concentrations of from 0.001 to about 5% by weight, preferably from 0.01 to about 3% by weight, and more preferably from about 0.1 to about 2% by weight. For example, use compositions of diester dicarboxylate antimicrobial compositions can include from about 0.001 wt-% to about 5 wt-% peroxyacetic acid, preferably about 0.01 wt-% to about 2.5 wt-% peroxyacetic acid, preferably about 0.1 wt-% to about 1.5 wt-% peroxyacetic acid. For example, use compositions of diester dicarboxylate antimicrobial compositions can include from about 0.001 wt-% to about 5 wt-% peroxyacetic acid and/or 0.0001 to about 3 wt-% peroxyoctanoic acid, preferably about 0.01 wt-% to about 2.5 wt-% peroxyacetic acid and/or 0.001 to about 1 wt-% peroxyoctanoic acid, preferably about 0.03 wt-% to about 0.5 wt-% peroxyacetic acid and/or peroxyoctanoic acid. These compositions can include the stated amounts or ranges not modified by about.

### Ester Peroxycarboxylic Acid Antimicrobial Agents

As used herein, ester peroxycarboxylic acid refers to a molecule having the formula: 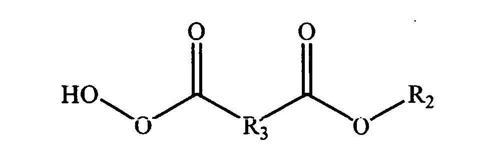 In this formula, R₂ and R₃ can independently be any of a wide variety of organic groups (e.g., alkyl, linear or cyclic, aromatic or saturated) or substituted organic groups (e.g., with one or more heteroatoms or organic groups). Ester peroxycarboxylic acid can be made using methods typically employed for producing peroxycarboxylic acid, such as incubating the corresponding monoester or diester dicarboxylate with hydrogen peroxide. Ester peroxycarboxylic acids derived from or corresponding to the diester dicarboxylates described herein are preferred.

Preferred ester peroxycarboxylic acids include alkyl ester peroxycarboxylic acids, preferably having the formula: 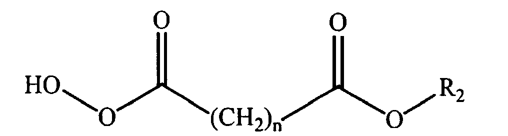 where R₁ and R₂ represent independently an alkyl group having from 1 to 8 carbons, and n is 0 to 10. The alkyl group can be either straight chain or branched, preferably straight chain. Preferred ester peroxycarboxylic acids are the monoester peroxycarboxylic acids corresponding to the preferred diester dicarboxylates described hereinabove.

The amount of ester peroxycarboxylic acid in use and concentrate compositions can range up to the limits at which the ester peroxycarboxylic acid can be dissolved or suspended in the composition. Preferably, the ester peroxycarboxylic acid is present in concentrate compositions at concentrations of from about 0.001 to about 50% by weight, preferably from 0.05 to about 25% by weight, preferably from about 0.08 to about 15% by weight, preferably from about 0.1 to about 10% by weight. In certain preferred embodiments the diester dicarboxylate concentrate composition contains ester peroxycarboxylic acid at amounts at the lower end of these ranges. These compositions can include the stated amounts or ranges not modified by about.

Use compositions can be made, for example, by diluting a concentrate or by mixing individual ingredients at the point of use. Typically use solutions of the above concentrate compositions include, independently, ester peroxycarboxylic acid or alkyl ester peroxycarboxylic acid at concentrations of from 0.001 to about 5% by weight, preferably from 0.01 to about 3% by weight, and more preferably from about 0.1 to about 2% by weight.

### Hydrogen Peroxide

The diester dicarboxylate compositions of the invention typically also include a hydrogen peroxide constituent. Hydrogen peroxide in combination with the percarboxylic acid provides certain biofilm removal or antimicrobial action against microorganisms. Additionally, hydrogen peroxide can provide an effervescent action which can irrigate any surface to which it is applied. Hydrogen peroxide works with a mechanical flushing action once applied which further cleans the surface. An additional advantage of hydrogen peroxide is the food compatibility of this composition upon use and decomposition. For example, combinations of peroxyacetic acid, peroxyoctanoic acid, and hydrogen peroxide result in acetic acid, octanoic acid, water, and oxygen upon decomposition, all of which are food product compatible.

Many oxidizing agents can be used for generating peroxycarboxylic acids. Suitable oxidizing agents, in addition to hydrogen peroxide, include inorganic and organic peroxides, such as, salts of perborate, percarbonate, and persulfate, percarbonic acid, and ozone. Hydrogen peroxide is generally preferred for several reasons. After application of the H₂O₂/peroxycarboxylic acid germicidal agent, the residue left merely includes water and an acidic constituent. Deposition of these products on the surface of a food product processing apparatus, such as a bath or spray apparatus, will not adversely effect the apparatus, the handling or processing, or the food product washed therein.

Typical diester dicarboxylate antimicrobial compositions can include from about 0.005 wt-% to about 75 wt-% hydrogen peroxide, preferably about 0.01 wt-% to about 25 wt-% hydrogen peroxide, preferably about 0.05 wt-% to about 10 wt-% hydrogen peroxide, preferably about 0.1 wt-% to about 5 wt-% hydrogen peroxide. Use compositions of diester dicarboxylate antimicrobial compositions can include from about 0.001 wt-% to about 5 wt-% hydrogen peroxide, preferably about 0.01 wt-% to about 2.5 wt-% hydrogen peroxide, most preferably about 0.1 wt-% to about 1.5 wt-% hydrogen peroxide.

### Cosolvent

A variety of cosolvents can be employed. In general, the cosolvent is selected based upon the characteristics of the chosen diester dicarboxylate and the solubility of the chosen diester dicarboxylate in the diluting solvent. For compositions in which water serves as the diluting solvent, the cosolvent generally will have higher water solubility than the water solubility of the chosen solvent. Preferably, the cosolvent has a high flashpoint (e.g., greater than about 30°C, more preferably greater than about 50°C, and most preferably greater than about 100°C), low odor and low human and animal toxicity.

Preferred cosolvents include 2-(2-aminoethoxy)ethanol, monoethanolamine, diethanolamine, triethanolamine, amyl acetate, amyl alcohol, butanol, 3-butoxyethyl-2-propanol, butyl acetate, n-butyl propionate, cyclohexanone, diacetone alcohol, diethoxyethanol, diethylene glycol methyl ether, diethylene glycol n-butyl ether, diisobutyl carbinol, diisobutyl ketone, dimethyl heptanol, dipropylene glycol n-butyl ether, dipropylene glycol methyl ether, dipropylene glycol propyl ether, dipropylene glycol tert-butyl ether, ethanol, ethyl acetate, 2-ethylhexanol, ethyl propionate, ethylene glycol butyl ether, ethylene glycol methyl ether acetate, hexanol, isobutanol, isobutyl acetate, isobutyl heptyl ketone, isophorone, isopropanol, isopropyl acetate, methanol, methyl amyl alcohol, methyl n-amyl ketone, 2-methyl-1-butanol, methyl ethyl ketone, methyl isobutyl ketone, 1-pentanol, n-pentyl propionate, 1-propanol, n-propyl acetate, n-propyl propionate, propylene glycol n-butyl ether, propylene glycol ethyl ether, propylene glycol methyl ether, propylene glycol n-propyl ether, tripropylene glycol methyl ether and tripropylene glycol n-butyl ether. Ethylene glycol butyl ether and dipropylene glycol n-butyl ether are particularly preferred cosolvents. Mixtures of cosolvents can be used if desired.

Commercially available cosolvents (all of which are available from Union Carbide Corp.) include Butoxyethyl PROPASOL^{™}, Butyl CARBITOL^{™} acetate, Butyl CARBITOL^{™}, Butyl CELLOSOLVE^{™} acetate, Butyl CELLOSOLVE^{™}, Butyl DIPROPASOL^{™}, Butyl PROPASOL^{™}, CARBITOL^{™} PM-600, CARBITOL^{™} Low Gravity, CELLOSOLVE^{™} acetate, CELLOSOLVE^{™}, Ester EEP^{™}, FILMER IBT^{™}, Hexyl CARBITOL^{™}, Hexyl CELLOSOLVE^{™}, Methyl CARBITOL^{™}, Methyl CELLOSOLVE^{™} acetate, Methyl CELLOSOLVE^{™}, Methyl DIPROPASOL^{™}, Methyl PROPASOL^{™} acetate, Methyl PROPASOL^{™}, Propyl CARBITOL^{™}, Propyl CELLOSOLVE^{™}, Propyl DIPROPASOL^{™} and Propyl PROPASOL^{™}.

A more preferred co-solvent would be compatible as an indirect or direct food additive or substance; especially those described in the Code of Federal Regulations (CFR), Title 21--Food and Drugs, parts 170 to 186 (which is incorporated herein by reference). Examples of such compatible cosolvents include glycerine, sorbitol, ethanol, propylene glycol, and the like.

Typical diester dicarboxylate antimicrobial compositions can include up to about 45 wt-% cosolvent, preferably up to about 20 wt-% cosolvent, more preferably up to about 10 wt-% cosolvent, most preferably up to about 5 wt-% cosolvent. Use compositions of diester dicarboxylate antimicrobial compositions typically include up to about 10 wt-% co-solvent, preferably up to about 5 wt-% cosolvent, preferably up to about 3 wt-% cosolvent. These compositions can include the stated amounts or ranges not modified by about. Preferred diester dicarboxylate antimicrobial compositions include glycerine, ethanol, propylene glycol, sorbitol, or mixtures thereof, and the like as cosolvent. Preferred diester dicarboxylate antimicrobial compositions include propylene glycol, glycerine, or mixtures thereof as cosolvent. Preferred diester dicarboxylate antimicrobial compositions include propylene glycol as cosolvent.

### Surfactant or Hydrotrope

A variety of surfactants or hydrotropes can be employed. In general, the surfactant identity and use level is selected based upon characteristics of the selected diester dicarboxylate and other additives, such as its solubility in the diluting solvent (usually water or a densified fluid such as carbon dioxide). Preferably, the surfactant does not tend to cause formation of insoluble deposits, and has low odor and low toxicity. Mixtures of surfactants can be used if desired.

Suitable surfactants include nonionic surfactants, anionic surfactants, cationic surfactants, amphoteric surfactants, amine oxides, and the like. Preferred surfactants include anionic surfactants and amine oxides. Preferred surfactants which can be employed include anionic surfactants such as alkyl sulfates and alkane sulfonates, linear alkyl benzene or naphthalene sulfonates, secondary alkane sulfonates, alkyl ether sulfates or sulfonates, alkyl phosphates or phosphonates, dialkyl sulfosuccinic acid esters, sugar esters (e.g., sorbitan esters), amine oxides (mono-, di-, or tri-alkyl) and C₈-C₁₀ alkyl glucosides.

Other surfactants or hydrotropes for use in the present invention include n-octanesulfonate, available as NAS 8D from Ecolab, n-octyl dimethylamine oxide, n-decyl dimethyl amine oxide, cocoa dimethylamine oxide, and the commonly available aromatic sulfonates such as the alkyl benzene sulfonates (e.g., dodecylbenzene sulfonate, cumene sulfonate, xylene sulfonates) or naphthalene sulfonates.

The most preferred anionic surfactants and hydrotropes include C6-C24 alkylbenzene sulfonates; C6-C24 olefin sulfonates; C6-C24 paraffin sulfonates; cumene sulfonate; xylene sulfonate; C6-C24 alkyl naphthalene sulfonates; C6-C24 alkyl or dialkyl diphenyl ether sulfonates or disulfonates, C4-C24 mono or dialkyl sulfosuccinates; sulfonated or sulfated fatty acids; C6-C24 alcohol sulfates (preferably C6-C12 alcohol sulfates); C6-C24 alcohol ether sulfates having 1 to about 20 ethylene oxide groups; and C4-C24 alkyl, aryl or alkaryl phosphate esters or their alkoxylated analogues having 1 to about 40 ethylene, propylene or butylene oxide units or mixtures thereof.

Other surfactants include nonionic surfactants of C6-C24 alcohol ethoxylates (preferably C6-C14 alcohol ethoxylates) having 1 to about 20 ethylene oxide groups (preferably about 9 to about 20 ethylene oxide groups); C6-C24 alkylphenol ethoxylates (preferably C8-C 10 alkylphenol ethoxylates) having 1 to about 100 ethylene oxide groups (preferably about 12 to about 20 ethylene oxide groups); ethylene oxide/propylene oxide/butylene oxide copolymers having 1 to about 400 ethylene oxide groups and 2 to about 100 propylene oxide groups and up to about 40 butylene oxide groups (either as block, heteric, or random mixed order); C6-C24 alkylpolyglycosides (preferably C6-C20 alkylpolyglycosides) having 1 to about 20 glycoside groups (preferably about 9 to about 20 glycoside groups); C6-C24 fatty acid ester ethoxylates, propoxylates or glycerides; and C4-C24 mono or dialkanolamides. A particularly useful nonionic surfactant for use as a defoamer is nonylphenol having an average of 12 moles of ethylene oxide condensed thereon, it being end capped with a hydrophobic portion including an average of 30 moles of propylene oxide.

More preferred surfactants include food grade surfactants, linear alkylbenzene sulfonic acids and their salts, and ethylene oxide/propylene oxide derivatives sold under the Pluronic^{™} trade name.

Preferred cationic surfactants include quaternary ammonium compounds having the formula: 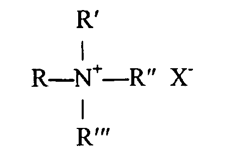 where R, R', R" and R"' are each a C₁-C₂₄ alkyl, aryl or aralkyl group that can optionally contain one or more P, O, S or N heteroatoms, and X is F, Cl, Br, I or an alkyl sulfate. Additional preferred cationic surfactants include ethoxylated and/or propoxlyated alkyl amines, diamines, or triamines.

Preferred amphoteric surfactants include amine oxide compounds having the formula: 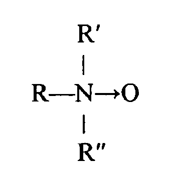 where R, R', R" and R"' are each a C₁-C₂₄ alkyl, aryl or aralkyl group that can optionally contain one or more P, O, S or N heteroatoms.

Another class of preferred amphoteric surfactants includes betaine compounds having the formula: 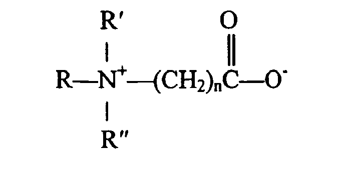 where R, R', R" and R"' are each a C₁-C₂₄ alkyl, aryl or aralkyl group that can optionally contain one or more P, O, S or N heteroatoms, and n is about 1 to about 10.

A most preferred surfactant would be compatible as an indirect or direct food additive or substance; especially those described in the Code of Federal Regulations (CFR), Title 21--Food and Drugs, parts 170 to 186 (which is incorporated herein by reference).

Typical diester dicarboxylate antimicrobial compositions can include up to about 45 wt-% surfactant and/or hydrotrope, preferably up to about 20 wt-% surfactant and/or hydrotrope, preferably up to about 10 wt-% surfactant and hydrotrope, preferably up to about 5 wt-% surfactant and hydrotrope. Use compositions of the diester dicarboxylate antimicrobial compositions can include up to about 10 wt-% surfactant and hydrotrope, preferably up to about 5 wt-% surfactant and hydrotrope, more preferably up to about 3 wt-% surfactant and hydrotrope.

### Adjuvants

The diester dicarboxylate composition of or employed in the method of the invention can also include any number of adjuvants. Specifically, the composition can include stabilizing agents, wetting agents, hydrotropes, thickeners, foaming agents, chelating agents, builders, pH adjusters, anticorrosion additives, antirust additives indicators as well as fragrances, pigments, or dyes among any number of constituents which can be added to the composition. Such adjuvants can be preformulated with the diester dicarboxylate composition or added to the system simultaneously, or even after, the addition of the diester dicarboxylate composition. The composition can also contain any number of other constituents as necessitated by the application, which are known and which can facilitate the activity of the present invention.

### Stabilizing Agents

The present diester dicarboxylate antimicrobial compositions can include components such as stabilizing agents, particularly those suitable for stabilizing peroxygen compounds or peroxycarboxylic acids. Such stabilizers are well-known. Such stabilizers include organic chelating compounds that sequester metal ions in solution, particularly most transition metal ions, which would promote decomposition of any peroxygen compounds therein. Typical complexing agents include organic amino- or hydroxy-polyphosphonic acid complexing agents (either in acid or soluble salt forms), carboxylic acids, hydroxycarboxylic acids, or aminocarboxylic acids.

Chelating agents or sequestrants generally useful as stabilizing agents in the present compositions include salts or acids of (expressed in acid form) dipicolinic acid, picolinic acid, gluconic acid, quinolinic acid, and alkyl diamine polyacetic acid-type chelating agents such as ethylenediamine tetraacetic acid (EDTA), hydroxyethylethylethylene diamine triacetic acid (HEDTA), and ethylene triaminepentaacetic acid, acrylic and polyacrylic acid-type stabilizing agents, phosphonic acid, and phosphonate-type chelating agents among others. Preferable sequestrants include phosphonic acids and phosphonate salts including 1-hydroxy ethylidene-1,1-diphosphonic acid (CH₃C(PO₃H₂)₂OH) (HEDP); ethylenediamine tetrakis methylenephosphonic acid (EDTMP); diethylenetriamine pentakis methylenephosphonic acid (DTPMP); cyclohexane-1,2-tetramethylene phosphonic acid; amino[tri(methylene phosphonic acid)]; (ethylene diamine[tetra methylenephosphonic acid)]; 2-phosphene butane-1,2,4-tricarboxylic acid; as well as the alkyl metal salts, ammonium salts, or alkyloyl amine salts, such as mono, di, or tetraethanolamine salts.

The stabilizing agent can be used in a concentrate at a concentration typically ranging from about 0 wt-% to about 20 wt-% of the composition, preferably from about 0.1 wt-% to about 10 wt-% of the composition, and most preferably from about 0.2 wt-% to 5 wt-% of the composition. In a use solution they range from 0 wt-% to about 5 wt-% of the composition, preferably from 0 wt-% to about 2 wt-% of the composition, and most preferably from 0 wt-% to 0.5 wt-% of the composition

Amino phosphates and phosphonates are also suitable for use as chelating agents in the compositions and include ethylene diamine (tetramethylene phosphonates), nitrilotrismethylene phosphates, diethylenetriamine (pentamethylene phosphonates). These amino phosphonates commonly contain alkyl or alkaline groups with less than 8 carbon atoms. The phosphonic acid may also include a low molecular weight phosphonopolycarboxylic acid such as one having about 2-4 carboxylic acid moieties and about 1-3 phosphonic acid groups. Such acids include 1-phosphono-1-methylsuccinic acid, phosphonosuccinic acid and 2-phosphonobutane-1,2,4-tricarboxylic acid.

Commercially available food additive chelating agents include phosphonates sold under the trade name DEQUEST® including, for example, 1-hydroxyethylidene-1,1-diphosphonic acid, available from Monsanto Industrial Chemicals Co., St. Louis, MO, as DEQUEST® 2010; amino(tri(methylenephosphonic acid)), (N[CH₂PO₃H₂]₃), available from Monsanto as DEQUEST® 2000; ethylenediamine[tetra(methylenephosphonic acid)] available from Monsanto as DEQUEST® 2041; and 2-phosphonobutane-1,2,4-tricarboxylic acid available from Mobay Chemical Corporation, Inorganic Chemicals Division, Pittsburgh, PA, as Bayhibit AM.

The above-mentioned phosphonic acids can also be used in the form of water soluble acid salts, particularly the alkali metal salts, such as sodium or potassium; the ammonium salts or the alkylol amine salts where the alkylol has 2 to 3 carbon atoms, such as mono-, di-, or triethanolamine salts. If desired, mixtures of the individual phosphonic acids or their acid salts can also be used.

The concentration of chelating agent useful in a concentrate of the present invention generally ranges up to about 10 wt-%, preferably up to about 2 wt-%, more preferably up to about 0.5 wt-%. In a use solution they can typically range up to about 5 wt-% of the composition, preferably up to about 1 wt-% of the composition, and most preferably up to 0.5 wt-% of the composition.

### Buffering Agents

Buffering agents can be added to the composition, for example, to stabilize the pH of an antimicrobial solution. While generally free of strong acids, the diester dicarboxylate compositions of the invention might include buffering adjuvants such as weak inorganic acids, organic acids, organic salts, and inorganic salts for buffering purposes. These might include an inorganic-based salt or weak inorganic acids including phosphates (including mono-, di-, or tri-basic potassium, calcium, or sodium phosphate), sulfates (including sodium, potassium, and magnesium sulfates), bisulfates, silicates (including sodium, potassium, and magnesium silicates), borates (including sodium or potassium borates, and boric acid), sulfamic acid; organic-based compounds such as malic acid, tartaric acid, citric acid, acetic acid, glycolic, glutamic acid, sorbic acid, benzoic acid, adipic acid, succinic acid, diacetate salts, or dimer and fatty acids; or mixtures thereof.

Additionally, carbonation acidification via the interaction of carbon dioxide with water is possible for aqueous formulations.

Some additional acids or salts that may be optionally added to the present invention for pH control, buffering, include aliphatic or olefinic carboxylic acids or carboxylate salts, aromatic carboxylic acids or carboxylic salts, inorganic acids or salts, polymeric carboxylic acids or carboxylate salts, organic-phosphonates, organic-phosphates or their salts, organic-sulfonates, organic-sulfates or their salts, organic boric acids or salts, amino acids or salts, or mixtures thereof. Most preferably the invention could include carboxylic acids, di/tri-carboxylic acids, hydroxy carboxylic acids, or alpha-hydroxy carboxylic acids - or their salts, anhydride, or esters - such as glycolic, lactic, malic, citric, tartaric, acetic, diacetate, butyric, octanoic, heptanoic, nonanoic, decanoic, malonic, adipic, succinic, salicylic, fumaric, maleic, acetoacetic, oxalacetic, pyruvic, α-ketoglutaric, and so forth. Preferably mild acids are used in the present invention.

Most preferred acid/salt combinations for use as buffers in the present invention include citric/citrate, phosphoric/phosphate, boric/borate, sulfuric/bisulfate, succinic/succinate buffer, or mixtures thereof, or any of these acids with any of the salts. The acid or buffer are, however, optional to the present diester dicarboxylate compositions.

### Formulating Diester Dicarboxylate Antimicrobial Compositions

The diester dicarboxylate antimicrobial compositions of the invention can be formulated to include the diluting solvent (e.g., water) as sold, or the diluting solvent can be added at any time up to the time of use. Preferably, the concentrates of the invention contain little or no diluting solvent as sold. A variety of dilution ratios can be employed, so long as the diluted composition exhibits the desired antimicrobial behavior when applied to the target microbes.

The ingredients in the concentrate can represent about 0.01 to about 99 wt-% of the diluted mixture, more preferably about 0.1 to about 50 wt-%, and most preferably about 0.5 to about 25 wt-%. The diluted antimicrobial compositions preferably contain about 0.01 to about 50 wt-% of the diester dicarboxylate, with concentrations of about 0.1 to 10 wt-% being more preferred and concentrations of about 0.5 to about 5 wt-% being most preferred. As a further guide, the diluted composition preferably contains diester dicarboxylate in an amount near the solubility limit of the diester dicarboxylate in the diluting solvent. In addition, the diluted antimicrobial compositions preferably are aqueous, contain antimicrobial agent, and are clear.

The compositions of the invention can be sold in the form of a kit containing the composition together with suitable directions for carrying out the method of the invention. Such directions typically will include recommended dilution ratios, applications, application techniques and safety warnings.

### Methods Employing the Diester Dicarboxylate Compositions

The diester dicarboxylate antimicrobial compositions of the invention can be used for a variety of domestic or industrial applications, e.g., to reduce microbial or viral populations on a surface or object or in a body or stream of water. The compositions can be applied in a variety of areas including kitchens, bathrooms, factories, hospitals, dental offices, pharmaceutical plants or co-packers, and food plants or co-packers, and can be applied to a variety of hard or soft surfaces having smooth, irregular or porous topography. Suitable hard surfaces include, for example, architectural surfaces (e.g., floors, walls, windows, sinks, tables, counters and signs); eating utensils; hard-surface medical or surgical instruments and devices; and hard-surface packaging. Such hard surfaces can be made from a variety of materials including, for example, ceramic, metal, glass, wood or hard plastic. Suitable soft surfaces include, for example paper; filter media, hospital and surgical linens and garments; soft-surface medical or surgical instruments and devices; and soft-surface packaging. Such soft surfaces can be made from a variety of materials including, for example, paper, fiber, woven or nonwoven fabric, soft plastics and elastomers. The compositions of the invention can also be applied to soft surfaces such as food and skin ex vivo. A method of treatment of the human or animal body and practiced on the human or animal body are excluded from the scope of the granted claims.

The diester dicarboxylate antimicrobial compositions of the invention can be included in products such as sterilants, sanitizers, disinfectants, preservatives, deodorizers, antiseptics, fungicides, germicides, sporicides, virucides, detergents, bleaches, hard surface cleaners, hand soaps and pre- or post-surgical scrubs, veterinary products such as mammalian skin treatments (e.g. teat dip).

The diester dicarboxylate antimicrobial compositions can also be used in products for sanitizing or disinfecting animal enclosures, pens, watering stations, and veterinary treatment areas such as inspection tables and operation rooms.

The present diester dicarboxylate compositions can be employed for reducing the population of pathogenic microorganisms, such as pathogens of humans, animals, and the like. The diester dicarboxylate compositions can exhibit activity against pathogens including fungi, molds, bacteria, spores, and viruses, for example, parvovirus, coxsackie virus, herpes virus, *S. aureus, E. coli, Streptococci, Legionella,* mycobacteria, or the like. Such pathogens can cause a varieties of diseases and disorders, including athletes foot, hairy hoof wart disease, Mastitis or other mammalian milking diseases, tuberculosis, and the like. The compositions of the present invention can reduce the population of microorganisms on skin or other external or mucosal surfaces of an animal. In addition, the present compositions can kill pathogenic microorganisms that spread through transfer by water, air, or a surface substrate.

The diester dicarboxylate antimicrobial compositions can also be used on foods and plant species to reduce surface microbial populations; used at manufacturing or processing sites handling such foods and plant species; or used to treat process waters around such sites. For example, the compositions can be used on food transport lines (e.g., as belt sprays); boot and hand-wash dip-pans; food storage facilities; anti-spoilage air circulation systems; refrigeration and cooler equipment; beverage chillers and warmers, blanchers, cutting boards, third sink areas, and meat chillers or scalding devices. The compositions of the invention can be used to treat produce transport waters such as those found in flumes, pipe transports, cutters, slicers, blanchers, retort systems, washers, and the like. Particular foodstuffs that can be treated with compositions of the invention include eggs, meats, seeds, leaves, fruits and vegetables. Particular plant surfaces include both harvested and growing leaves, roots, seeds, skins or shells, stems, stalks, tubers, corms, fruit, and the like. The compositions may also be used to treat animal carcasses to reduce both pathogenic and non-pathogenic microbial levels.

The present diester dicarboxylate compositions are useful in the cleaning or sanitizing of containers, processing facilities, or equipment in the food service, food processing, beverage, dairy, brewery, and pharmaceutical industries. The antimicrobial compositions have particular value for use on food, beverage, and pharmaceutical packaging materials and equipment, and especially for cold or hot aseptic packaging. Examples of process facilities in which the composition of the invention can be employed include a milk line dairy, a continuous brewing system, food processing lines such as pumpable food systems and beverage lines, pharmaceutical fill lines or tabletizers and bottlers, etc. Food service wares can be disinfected with the composition of the invention. For example, the compositions can also be used on or in ware wash machines, dishware, bottle washers, bottle chillers, warmers, third sink washers, cutting areas (e.g., water knives, slicers, cutters and saws) and egg washers. Particular treatable surfaces include packaging such as cartons, bottles, films and resins; dish ware such as glasses, plates, utensils, pots and pans; ware wash machines; exposed food preparation area surfaces such as sinks, counters, tables, floors and walls; processing equipment such as tanks, vats, lines, pumps and hoses (e.g., dairy processing equipment for processing milk, cheese, ice cream and other dairy products); and transportation vehicles. Containers include glass bottles, PVC or polyolefin film sacks, cans, polyester, PEN or PET, various copolymers, bottles of various volumes (100 ml to 2 liter, etc.), one gallon milk containers, aluminum foil, paper board juice or milk containers, etc. A detailed description of additional treatable food, beverage, and pharmaceutical packaging container materials are found in the Code of Federal Regulations, Title 21, parts 175 to 178.

The antimicrobial compositions can also be used on or in other industrial equipment and in other industrial process streams such as heaters, cooling towers, boilers, retort waters, rinse waters, aseptic packaging wash waters for foods, pharmaceuticals, and beverages, and the like. The compositions can be used to treat microbes and odors in recreational waters such as in pools, spas, recreational flumes and water slides, fountains, and the like.

A filter containing the composition can reduce the population of microorganisms in air and liquids. Such a filter can remove water and air-born pathogens such as *Legionella.*

Other hard surface cleaning applications for the antimicrobial compositions of the invention include clean-in-place systems (CIP), clean-out-of-place systems (COP), washer-decontaminators, sterilizers, textile laundry machines, ultra and nano-filtration systems and indoor air filters. COP systems can include readily accessible systems including wash tanks, soaking vessels, mop buckets, holding tanks, scrub sinks, vehicle parts washers, non-continuous batch washers and systems, and the like.

Generally, the actual cleaning of the in-place system or other surface (i.e., removal of unwanted offal therein) is accomplished with a different material such as a formulated detergent which is introduced with heated water. After this cleaning step, the instant sanitizing composition would be applied or introduced into the system at a use solution concentration in unheated, ambient temperature water. CIP typically employ flow rates on the order of about 40 to about 600 liters per minute, temperatures from ambient up to about 70 °C, and contact times of at least about 10 seconds, more preferably about 30 to about 120 seconds. The present sanitizing composition is found to remain in solution in cold (e.g., 40 °F/4 °C) water and heated (e.g., 140 °F/60 °C) water. Although it is not normally necessary to heat the aqueous use solution of the present composition, under some circumstances heating may be desirable to further enhance its antimicrobial activity. These materials are useful at any conceivable temperatures.

A method of sanitizing substantially fixed in-place process facilities includes the following steps. The use composition of the invention is introduced into the process facilities at a temperature in the range of about 4 °C to 80 °C. After introduction of the use solution, the solution is held in a container or circulated throughout the system for a time sufficient to sanitize the process facilities (i.e., to kill undesirable microorganisms). After the surfaces have been sanitized by means of the present composition, the use solution is drained. Upon completion of the sanitizing step, the system optionally may be rinsed with other materials such as potable water. The composition is preferably circulated through the process facilities for 10 minutes or less.

The composition may also be employed by dipping food processing equipment into the use solution, soaking the equipment for a time sufficient to sanitize the equipment,, and wiping or draining excess solution off the equipment, The composition may be further employed by spraying or wiping food processing surfaces with the use solution, keeping the surfaces wet for a time sufficient to sanitize the surfaces, and removing excess solution by wiping, draining vertically, vacuuming, etc.

The composition of the invention may also be used in a method of sanitizing hard surfaces such as institutional type equipment, utensils, dishes, health care equipment or tools, and other hard surfaces. The composition may also be employed in sanitizing clothing items or fabric which have become contaminated. The use composition is contacted with any of the above contaminated surfaces or items at use temperatures in the range of about 4°C to 60°C, for a period of time effective to sanitize, disinfect, or sterilize the surface or item. For example, the concentrate composition can be injected into the wash or rinse water of a laundry machine and contacted with contaminated fabric for a time sufficient to sanitize the fabric. Excess solution can then be removed by rinsing or centrifuging the fabric.

The antimicrobial compositions can be applied to microbes or to soiled or cleaned surfaces using a variety of methods. These methods can operate on an object, surface, in a body or stream of water or a gas, or the like, by contacting the object, surface, body, or stream with a diester dicarboxylate composition of the invention. Contacting can include any of numerous methods for applying a composition, such as spraying the composition, immersing or flooding the object in or with the composition, foam or gel treating the object with the composition, fogging, atomizing, or aerosolizing, annular misting, or a combination thereof.

A concentrate or use concentration of a diester dicarboxylate composition of the present invention can be applied to or brought into contact with an object by any conventional method or apparatus for applying an antimicrobial or cleaning composition to an object. For example, the object can be wiped with, sprayed with, and/or immersed in the diester dicarboxylate composition, or a use composition made from the diester dicarboxylate composition. The diester dicarboxylate composition can be sprayed or wiped onto a surface; the composition can be caused to flow over the surface, or the surface can be dipped into the composition. Contacting can be manual or by machine.

The compositions can be formulated as liquids, gels, aerosols, waxes, solids, or powders. If steam or another gaseous diluting solvent is employed, then the compositions can be formulated to be applied in a gaseous state.

### Methods for Beverage, Food, and Pharmaceutical Processing

The diester dicarboxylate antimicrobial compositions of the invention can be used in the manufacture of beverage, food, and pharmaceutical materials including fruit juice, dairy products, malt beverages, soybean-based products, yogurts, baby foods, bottled water products, teas, cough medicines, drugs, and soft drinks. The materials can be used to sanitize, disinfect, act as a sporicide for, or sterilize bottles, pumps, lines, tanks and mixing equipment used in the manufacture of such beverages. Further, the diester dicarboxylate antimicrobial compositions can be used in aseptic, cold filling operations in which the interior of the food, beverage, or pharmaceutical container is sanitized or sterilized prior to filling. In such operations, a container is contacted with the sanitizing diester dicarboxylate composition material, typically using a spray, or dipping, or filling device to intimately contact the inside of then container with the diester dicarboxylate composition, for sufficient period of time to reduce microorganism populations within the container. The container is then emptied of the amount of sanitizer or sterilant used. After emptying, the container can then be commonly rinsed with potable water or sterilized water and again emptied; however, this is not a required step of the current invention. After rinsing, the container is then filled with the beverage, food, or pharmaceutical. The container is then sealed, capped or closed and then packed for shipment for ultimate sale. The sealed container can be autoclaved or retorted for added microorganism kill.

In food, beverage, or pharmaceutical manufacturing, fungal microorganisms of the genus *Chaetomium* or *Arthrinium,* and spores or bacterial of the genus *Bacillus spp.* can be a significant problem in bottling processes, particularly in cold aseptic bottling processes. The diester dicarboxylate sanitizer materials of the invention can be used for the purpose of controlling or substantially reducing (by more than a 5 log₁₀ reduction) the number of *Chaetomium* or *Arthrinium* or *Bacillus* microorganisms in beverage or food or pharmaceutical bottling lines using cold aseptic bottling techniques.

In such techniques, metallic, aluminum or steel cans can be filled, glass bottles or containers can be filled, or plastic (PET or PBT or PEN) bottles, and the like can be filled using cold aseptic filling techniques. In such processes, the diester dicarboxylate materials of the invention can be used to sanitize the interior of beverage containers prior to filling with the carbonated beverage. Typical carbonated beverages in this application include cola beverage, fruit beverages, ginger ale beverages, root beer beverages, iced tea beverages which may be non-carbonated, and other common beverages considered soft drinks. The diester dicarboxylate materials of the invention can be used to sanitize both the tanks, lines, pumps, and other equipment used for the manufacture and storage of the soft drink material and also used in the bottling or containers for the beverages. The diester dicarboxylate sanitizing materials are useful for killing both bacterial and fungal microorganisms that can be present on the surfaces of the production equipment and beverage containers.

The present invention is based upon the surprising discovery that diester dicarboxylate compositions can effectively kill microorganisms (e.g., > 1 log₁₀ and especially a 5 log₁₀ reduction in 30 seconds) from a concentration level of at least about 50 part per million (ppm), preferably about 500 ppm, and most preferably about 1500 ppm of diester dicarboxylate composition. Typically the diester dicarboxylate composition, excluding water, would be present at a concentration of 0.01 to about 50 wt-%, preferably 0.1 to about 10 wt-%, and most preferably 0.5 to about 5 wt-%.

The Figure shows a schematic for an embodiment of a bottle spraying/bottling operation using diester dicarboxylate composition including a cold aseptic operation. In the figure, a plant 100 that can contact beverage bottles with a diester dicarboxylate composition for a sanitizing regime is shown. In the figure, bottles 110 are passed through a sterilizing tunnel 102. The sanitized bottles 110a then pass through a rinsing tunnel 103 and emerge as sanitized rinsed bottles 110b.

In the process, bulk diester dicarboxylate composition is added to a holding tank 101. Commonly, the materials are maintained at a temperature of about 22°C in tank 101. To obtain the effective use concentration of the diester dicarboxylate composition, make-up water 105 is combined with the concentrated diester dicarboxylate composition into the tank 101. The diester dicarboxylate use composition is passed through a heater 108 to reach a temperature of about 45-50 °C. The heated diester dicarboxylate use composition is sprayed within sterilizing tunnel 102 into and onto all surfaces of the bottle 110. An intimate contact between the diester dicarboxylate composition and the bottle 110 is essential for reducing microbial populations to a sanitizing level.

After contact with the diester dicarboxylate use composition and after dumping any excess composition from the bottles, the sanitized bottles 110 are then passed to a fresh water rinse tunnel 103. Fresh water 108 is provided from a fresh water make-up into a spray rinsing tunnel 103. Excess spray drains from rinsing tunnel 103 to drain 106. Within the tunnel 103, sanitized bottles 110a are thoroughly rinsed with fresh water. The complete removal of the diester dicarboxylate composition from the bottles 110a is important for maintaining high quality of the beverage product. The rinsed and sanitized bottles 110b are then removed from the rinsing tunnel.

The day tank 101, the sterilizing tunnel 102 and the rinsing tunnel 103 are all respectively vended to wet scrubber or vent 111a, 111b or 111c to remove vapor or fumes from the system components. The sanitizer material that has been sprayed and drained from the bottles 110a accumulate in the bottom of the spray tunnel 102 and is then recycled through recycle line and heater 107 into the day tank 101.

The day tank is used for diluting, storing, and delivering the diester dicarboxylate use composition which can include 0.01 to about 50 wt-%, preferably 0.1 to about 10 wt-%, and most preferably 0.5 to about 5 wt-% diester dicarboxylate composition. All active treating equipment should be vented to a wet scrubber to prevent fumes from entering the atmosphere from the treatment equipment. Draining of the containers of their diester dicarboxylate composition is important to reduce carry over minimized product loss. The contact between the bottles and the diester dicarboxylate antimicrobial composition is typically at a temperature of greater than about 0 °C , more typically greater than 25 °C, and most typically greater than about 40 °C. Often temperatures between about 40 °C and 90 °C are used. To obtain sanitization or sterilization of beverage containers at about 200 ppm to about 10,000 ppm, more preferably 500 ppm to about 5,000 ppm, and most preferably 700 ppm to about 2,500 ppm diester dicarboxylate composition, contact at 40 °C to 60 °C for at least 5 sec, more preferably 10 sec, contact time is required.

Sanitizing or sterilizing conditions are greatly dependent on the processing temperatures, times, soil loading, water quality, and the like. Preferably, the sanitization equipment, day tank, sanitizing tunnel and rinsing tunnel are manufactured from polyolefin structural plastics, passivated stainless steel, or other non-corrosion sensitive production materials.

In the cold aseptic filling of 16 ounce polyethylene terephthalate (PET bottle), or other polymeric, beverage containers, a process has been adopted using a diester dicarboxylate composition. The diester dicarboxylate composition is diluted to a use concentration of about 0.1 to about 10 wt% and is maintained at an effective elevated temperature of about 25°C to about 70°C, preferably about 40°C to about 60°C. The spray or flood of the bottle with the material ensures contact between the bottle and the sanitizer material for at least 5, preferably 10, seconds. After flooding is complete, the bottle is drained of all contents for a minimum of 2 seconds and optionally followed by a 5 second water rinse with sterilized water using about 200 milliliters of water at 38°C (100°F). If optionally filled with the rinse water, the bottle is then drained of the sterilized water rinse for at least 2 seconds and is immediately filled with liquid beverage. After the rinse is complete, the bottles usually maintain less than 10, preferably 3, milliliters of rinse water after draining.

### Methods for Contacting a Food Product

The present method and system provide for contacting a food product with a diester dicarboxylate composition employing any method or apparatus suitable for applying a diester dicarboxylate composition. For example, the method and system of the invention can contact the food product with a spray of a diester dicarboxylate composition, by immersion in the diester dicarboxylate composition, by foam or gel treating with the diester dicarboxylate composition, or the like. Contact with a spray, a foam, a gel, or by immersion can be accomplished by a variety of methods known for applying antimicrobial agents to food. These same methods can also be adapted to apply the diester dicarboxylate compositions of the invention to other objects.

The present methods require a certain minimal contact time of the composition with food product for occurrence of significant antimicrobial effect. The contact time can vary with concentration of the use composition, method of applying the use composition, temperature of the use composition, amount of soil on the food product, number of microorganisms on the food product, type of antimicrobial agent, or the like. Preferably the exposure time is at least about 5 to about 15 seconds.

A preferred method for washing food product employs a pressure spray including the diester dicarboxylate composition. During application of the spray solution on the food product, the surface of the food product can be moved with mechanical action, preferably agitated, rubbed, brushed, etc. Agitation can be by physical scrubbing of the food product, through the action of the spray solution under pressure, through sonication, or by other methods. Agitation increases the efficacy of the spray solution in killing micro-organisms, perhaps due to better exposure of the solution into the crevasses or small colonies containing the micro-organisms. The spray solution, before application, can also be heated to a temperature of about 15 to 20 °C, preferably about 20 to 60 °C to increase efficacy. The spray diester dicarboxylate composition can be left on the food product for a sufficient amount of time to suitably reduce the population of microorganisms, and then rinsed, drained, or evaporated off the food product.

Application of the material by spray can be accomplished using a manual spray wand application, an automatic spray of food product moving along a production line using multiple spray heads to ensure complete contact, or other spray apparatus. One preferred automatic spray application involves the use of a spray booth. The spray booth substantially confines the sprayed composition to within the booth. The production line moves the food product through the entryway into the spray booth in which the food product is sprayed on all its exterior surfaces with sprays within the booth. After a complete coverage of the material and drainage of the material from the food product within the booth, the food product can then exit the booth. The spray booth can include steam jets that can be used to apply the diester dicarboxylate compositions of the invention. These steam jets can be used in combination with cooling water to ensure that the treatment reaching the food product surface is less than 65°C, preferably less than 60°C. The temperature of the spray on the food product is important to ensure that the food product is not substantially altered (cooked) by the temperature of the spray. The spray pattern can be virtually any useful spray pattern.

Immersing a food product in a liquid diester dicarboxylate composition can be accomplished by any of a variety of known methods. For example, the food product can be placed into a tank or bath containing the diester dicarboxylate composition. Alternatively, the food product can be transported or processed in a flume of the diester dicarboxylate composition. The washing solution is preferably agitated to increase the efficacy of the solution and the speed at which the solution reduces micro-organisms accompanying the food product. Agitation can be obtained by conventional methods, including ultrasonics, aeration by bubbling air through the solution, by mechanical methods, such as strainers, paddles, brushes, pump driven liquid jets, or by combinations of these methods. The washing solution can be heated to increase the efficacy of the solution in killing micro-organisms. After the food product has been immersed for a time sufficient for the desired antimicrobial effect, the food product can be removed from the bath or flume and the diester dicarboxylate composition can be rinsed, drained, or evaporated off the food product.

In another alternative embodiment of the present invention, the food product can be treated with a foaming version of the composition. The foam can be prepared by mixing foaming surfactants with the washing solution at time of use. The foaming surfactants can be nonionic, anionic or cationic in nature. Examples of useful surfactant types include, but are not limited to the following: alcohol ethoxylates, alcohol ethoxylate carboxylate, amine oxides, alkyl sulfates, alkyl ether sulfate, sulfonates, quaternary ammonium compounds, alkyl sarcosines, betaines and alkyl amides. The foaming surfactant is typically mixed at time of use with the washing solution Use solution levels of the foaming agents is from about 50 ppm to about 2 wt-%. At time of use, compressed air can be injected into the mixture, then applied to the food product surface through a foam application device such as a tank foamer or an aspirated wall mounted foamer.

In another alternative embodiment of the present invention, the food product can be treated with a thickened or gelled version of the composition. In the thickened or gelled state the washing solution remains in contact with the food product surface for longer periods of time, thus increasing the antimicrobial efficacy. The thickened or gelled solution will also adhere to vertical surfaces. The composition or me washing solution can be thickened or gelled using existing technologies such as: xanthan gum, polymeric thickeners, cellulose thickeners, or the like. Rod micelle forming systems such as amine oxides and anionic counter ions could also be used. The thickeners or gel forming agents can be used either in the concentrated product or mixing with the washing solution, at time of use. Typical use levels of thickeners or gel agents range from about 100 ppm to about 10 wt-%.

The present invention may be better understood with reference to the following examples.

### EXAMPLE

The compositions and controls were evaluated for antimicrobial activity using the procedure set out in set out in *Germicidal and Detergent Sanitizing Action of Disinfectants,* Official Methods of Analysis of the Association of Official Analytical Chemists, paragraph 960.09 and applicable sections, 15th Edition, 1990 (EPA Guideline 91-2), using a 10 second contact time at 60° C against the spore-forming, enterotoxin producing pathogen *Bacillus cereus* and the mold *Chaetomium funicola.* This brief contact time presented an especially challenging test, as evidenced by low observed log order reduction values for the controls.

These diester dicarboxylate compositions included diester dicarboxylates of various chain lengths, both in the portion of the ester derived from the carboxylic acid and the portion derived from the alcohol. In each case, the peroxycarboxylic acid employed was Ecolab's KX 6138.

The following table lists the components of the compositions and the log kill against the two microorganisms.

**TABLE**

| Solvent type | Phases | Solvent wt-% | Peroxycarboxylic acid (ppm) | C. funicola Log Reduction | B. Cereus Log reduction |
|---|---|---|---|---|---|
| Dimethyl Adipate | Single Phase | 0.5 | 1500 | 2.1 | 4.21 |
| Dimethyl Adipate | Single Phase | 1 | 1500 | >3.45 | 4.97 |
| Dimethyl Suberate | Phase separation | 0.5 | 1500 | >3.45 | >6.11 |
| Dimethyl Suberate | Phase separation | 1 | 1500 | >3.45 | >6.11 |
| Diethyl Succinate | Single phase | 0.5 | 1500 | 1.8 | 4.2 |
| Diethyl Adipate | Phase separation | 0.5 | 1500 | 2.3 | >6.11 |
| DBE-3^{™} | Single phase | 1 | 1000 | 0.94 | 0.97 |
| Dimethyl Succinate | Single phase | 1 | 1000 | 0.16 | 0.23 |
| Dimethyl Glutarate | Single phase | 1 | 1000 | 0.88 | 0.59 |
| Dimethyl adipate | Single phase | 1 | 1000 | 1.02 | 1.08 |
| DBE-3^{™} | Single phase | 1 | 2000 | 3.15 | 2.29 |
| Dimethyl Succinate | Single phase | 1 | 2000 | 0.1 | 1.21 |
| Dimethyl Glutarate | Single phase | 1 | 2000 | 1.46 | 1.35 |
| Dimethyl adipate | Single phase | 1 | 2000 | 3.26 | 2.26 |
| DBE-3^{™} | Single phase | 2.5 | 1000 | >4.54 | 2.91 |
| Dimethyl Succinate | Single phase | 2.5 | 1000 | 0.54 | 0.42 |
| Dimethyl Glutarate | Single phase | 2.5 | 1000 | 1.89 | 1.53 |
| Dimethyl adipate | Single phase | 2.5 | 1000 | >4.54 | 1.46 |
| DBE-3^{™} | Single phase | 2.5 | 2000 | >4.54 | 5.76 |
| Dimethyl Succinate | Single phase | 2.5 | 2000 | 1.79 | 1.59 |
| Dimethyl Glutarate | Single phase | 2.5 | 2000 | >4.54 | 2.55 |
| Dimethyl adipate | Single phase | 2.5 | 2000 | >4.54 | 6.46 |
| DBE-3^{™} | Single phase | 1 | 1000 | 1.64 | 0.91 |
| DBE-3^{™} | Single phase | 2.5 | 1000 | >4.54 | 2.75 |
| Dimethyl Glutarate | Single phase | 1 | 1000 | 0.98 | 0.32 |
| Dimethyl Succinate | Single phase | 2.5 | 1000 | 1.02 | 0.52 |
| DBE-30^{™} | Single phase | 2 | 2000 | >4.56 | >5.58 |
| DBE-3^{™} | Single phase | 2 | 1500 | >4.56 | >5.58 |
| DBE-3^{™} | Single phase | 1.5 | 2000 | >4.56 | >5.58 |
| DBE-3^{™} | Single phase | 1.5 | 1500 | >4.56 | >5.58 |
| Dimethyl sebacate | Phase separation | 1 | 1500 | 1.12 | 5.18 |
| Dimethyl sebacate | Phase separation | 0.5 | 1500 | 1.7 | 4.7 |
| Dimethyl sebacate | Phase separation | 0.1 | 1500 | 1.38 | 4.6 |
| Dibutyl Sebacate | Phase separation | 1 | 1500 | 0.84 | 2.38 |
| Dibutyl Sebacate | Phase separation | 0.5 | 1500 | 0.26 | 2.05 |
| Dibutyl Sebacate | Phase separation | 0.1 | 1500 | 0.66 | 2.1 |
| Dioctyl Sebacate | Phase separation | 1 | 1500 | 0.98 | 0.94 |
| Dioctyl Sebacate | Phase separation | 0.5 | 1500 | 0.86 | 1.13 |
| Dioctyl Sebacate | Phase separation | 0.1 | 1500 | 0.79 | 0.99 |
| DBE-IB | Phase separation | 1 | 1500 | 0.9 | 3.24 |
| DBE-IB | Phase separation | 0.5 | 1500 | 0.93 | 3.07 |
| DBE-IB | Phase separation | 0.1 | 1500 | 0.72 | 3.18 |

This data indicates that the greatest antimicrobial activity derives from composition including a diester dicarboxylate having 5 to 8 carbon atoms in the dicarboxylate moiety and 1 to 2 carbons in the ester moiety, for a total of 6 to 10 carbon atoms in the diester dicarboxylate. Among these diester dicarboxylates, the greatest activity among diester dicarboxylates with 6 to 8 carbon atoms in the dicarboxylate moiety and 1 to 2 carbons in the ester moiety, for a total of 7 to 10 carbon atoms in the diester dicarboxylate. Among the esters exhibiting the greatest activity were methyl esters of adipic and suberic acids.

It should be noted that, as used in this specification and the appended claims, the singular forms "a," "an," and "the" include plural referents unless the content clearly dictates otherwise. Thus, for example, reference to a composition containing "a compound" includes a mixture of two or more compounds. It should also be noted that the term "or" is generally employed in its sense including "and/or" unless the content clearly dictates otherwise.

All publications and patent applications in this specification are indicative of the level of ordinary skill in the art to which this invention pertains.

The invention has been described with reference to various specific and preferred embodiments and techniques.

## Claims

1. An antimicrobial composition comprising diluting solvent, diester dicarboxylate, and antimicrobial agent comprising at least one of peroxycarboxylic acid and organic acidifying agent, the diester dicarboxylate having the formula: 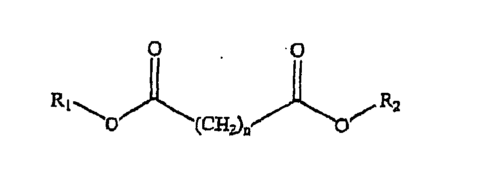 wherein n is 4 - 8 and R₁ and R₂ are independently C₁ to C₄ alkyl, and wherein the organic acidifying agent comprises aliphatic carboxylic acid, aromatic carboxylic acid, or mixtures thereof.

2. The composition of claim 1, wherein the peroxycarboxylic acid comprises peroxyacetic acid, peroxyheptanoic acid, peroxyoctanoic acid, peroxypropionic acid or mixtures thereof.

3. The composition of claim 1, wherein the carboxylic acid comprises formic acid, acetic acid, propionic acid, heptanoic acid, octanoic acid, nonanoic acid, decanoic acid, benzoic acid, salicylic acid, salt thereof, or mixtures thereof.

4. composition of claim 1, wherein the diester dicarboxylate comprises dimethyl adipate, diethyl adipate, dibutyl adipate, dimethyl pimelate, diethyl pimelate, dimethyl suberate, diethyl suberate, or mixtures thereof.

5. The composition of claim 1, comprising water and a least 10 weight % diester dicarboxylate.

6. The composition of claim 1, comprising water and at least 50 weight % diester dicarboxylate.

7. The composition of claim 1 , comprising water and 75 weight % to 95 weight % diester dicarboxylate.

8. The composition of claim 1, wherein the composition is cosolvent-free.

9. The composition of claim 1, wherein the composition is surfactant-free.

10. A method for antimicrobial treatment comprising applying to microbes the composition according to claims 1 to 9, wherein the treatment of the human or animal body practiced on the human or animal body is excluded.

11. The method of claim 10, comprising applying the composition to hard surface, soft surface, porous surface, food substance, or skin ex vivo.

12. The method of claim 10, comprising applying the composition to food packaging.

13. The method of claim 12, wherein the food packaging comprises aseptic food packaging.

14. The method of claim 10, comprising applying the composition to hospital or surgical linens or garments.

15. The method of claim 10, comprising applying the composition for sanitizing a solution or hard surface.

16. The method of claim 10, comprising applying the composition for acting as a sporicide in a solution or on a hard surface.

17. The method of claim 10, comprising applying the composition for sterilizing a hard surface.

18. The method of claim 10, comprising applying to surface, body of water, or stream of water.

## Patentansprüche

1. Antimikrobielle Zusammensetzung, umfassend ein Verdünnungslösungsmittel, Dicarbonsäurediester und antimikrobielles Agens, umfassend zumindest Peroxycarbonsäure und/oder organisches säuerndes Agens, wobei der Dicarbonsäurediester die Formel besitzt: 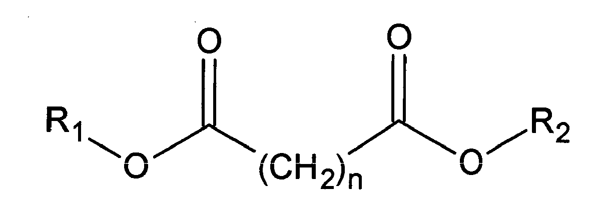 wobei n 4 - 8 beträgt und R₁ und R₂ in unabhängiger Weise C₁- bis C₄-Alkyle sind, und wobei das organische Säuerungsmittel aliphatische Carbonsäuren, aromatische Carbonsäuren oder Mischungen davon umfasst.

2. Zusammensetzung nach Anspruch 1, wobei die Peroxycarbonsäure Peroxyessigsäure, Peroxyheptansäure, Peroxyoctansäure, Peroxypropionsäure oder Mischungen davon umfasst.

3. Zusammensetzung nach Anspruch 1, wobei die Carbonsäure Ameisensäure, Essigsäure, Propionsäure, Heptansäure, Octansäure, Nonansäure, Decansäure, Benzoesäure, Salicylsäure, Salze von diesen oder Mischungen davon umfasst.

4. Zusammensetzung nach Anspruch 1, wobei der Dicarbonsäurediester Dimethyladipat, Diethyladipat, Dibutyladipat, Dimethylpimelat, Diethylpimelat, Dimethylsuberat, Diethylsuberat oder Mischungen davon umfasst.

5. Zusammensetzung nach Anspruch 1, umfassend Wasser und mindestens 10 Gewichtsprozent Dicarbonsäurediester.

6. Zusammensetzung nach Anspruch 1, umfassend Wasser und mindestens 50 Gewichtsprozent Dicarbonsäurediester.

7. Zusammensetzung nach Anspruch 1, umfassend Wasser und 75 Gewichtsprozent bis 95 Gewichtsprozent Dicarbonsäurediester.

8. Zusammensetzung nach Anspruch 1, wobei die Zusammensetzung frei von Kosolvenzien ist.

9. Zusammensetzung nach Anspruch 1, wobei die Zusammensetzung frei von Tensiden ist.

10. Verfahren zur antimikrobiellen Behandlung, umfassend die Anwendung der Zusammensetzung nach den Ansprüchen 1 bis 9 auf Mikroben, wobei die Behandlung des menschlichen oder tierischen Körpers, vorgenommen am menschlichen oder tierischen Körper, ausgeschlossen ist.

11. Verfahren nach Anspruch 10, umfassend die Anwendung der Zusammensetzung an harten Oberflächen, weichen Oberflächen, porösen Oberflächen, Nahrungsmitteln oder Haut *ex vivo.*

12. Verfahren nach Anspruch 10, umfassend die Anwendung der Zusammensetzung an Nahrungsmittelverpackungen.

13. Verfahren nach Anspruch 12, wobei die Nahrungsmittelverpackung aseptische Verpackung umfasst.

14. Verfahren nach Anspruch 10, umfassend die Anwendung der Zusammensetzung auf klinische oder chirurgische Wäsche oder Kleidung.

15. Verfahren nach Anspruch 10, umfassend die Anwendung der Zusammensetzung zur Desinfizierung einer Lösung oder einer harten Oberfläche.

16. Verfahren nach Anspruch 10, umfassend die Anwendung der Zusammensetzung zur Wirkung als Sporizid in einer Lösung oder auf einer harten Oberfläche.

17. Verfahren nach Anspruch 10, umfassend die Anwendung der Zusammensetzung zur Sterilisierung einer harten Oberfläche.

18. Verfahren nach Anspruch 10, umfassend die Anwendung auf eine Oberfläche, ein Wasservolumen oder einen Wasserstrom.

## Revendications

1. Composition antimicrobienne comprenant un solvant de dilution, un diester dicarboxylique, et un agent antimicrobien comprenant au moins un composant parmi l'acide peroxycarboxylique et un agent acidifiant organique, le diester dicarboxylique répondant à la formule : 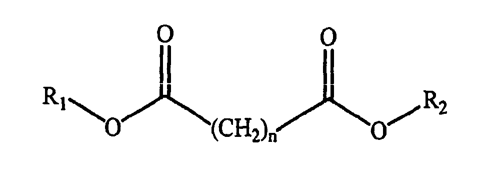 dans laquelle n vaut de 4 à 8 et R₁ et R₂ sont indépendamment un alkyle C₁ à C₄, et dans laquelle l'agent acidifiant organique comprend un acide carboxylique aliphatique, un acide carboxylique aromatique, ou des mélanges de ceux-ci.

2. Composition selon la revendication 1, dans laquelle l'acide peroxycarboxylique comprend l'acide peroxyacétique, l'acide peroxyheptanoïque, l'acide peroxyoctanoïque, l'acide peroxypropionique ou des mélanges de ceux-ci.

3. Composition selon la revendication 1, dans laquelle l'acide carboxylique comprend l'acide formique, l'acide acétique, l'acide propionique, l'acide heptanoïque, l'acide octanoïque, l'acide nonanoïque, l'acide décanoïque, l'acide benzoïque, l'acide salicylique, leurs sels, ou leurs mélanges.

4. Composition selon la revendication 1, dans laquelle le diester dicarboxylique comprend l'adipate de diméthyle, l'adipate de diéthyle, l'adipate de dibutyle, le pimélate de diméthyle, le pimélate de diéthyle, le subérate de diméthyle, le subérate de diéthyle, ou leurs mélanges.

5. Composition selon la revendication 1, comprenant de l'eau et au moins 10 % en poids de diester dicarboxylique.

6. Composition selon la revendication 1, comprenant de l'eau et au moins 50 % en poids de diester dicarboxylique.

7. Composition selon la revendication 1, comprenant de l'eau et de 75 à 95 % en poids de diester dicarboxylique.

8. Composition selon la revendication 1, dans laquelle la composition est dépourvue de cosolvant.

9. Composition selon la revendication 1, dans laquelle la composition est dépourvue de tensioactif.

10. Procédé de traitement antimicrobien comprenant l'application à des microorganismes de la composition selon les revendications 1 à 9, dans lequel le traitement du corps humain ou animal pratiqué sur le corps humain ou animal est exclus.

11. Procédé selon la revendication 10, comprenant l'application de la composition à une surface dure, une surface molle, une surface poreuse, une substance alimentaire, ou la peau ex vivo.

12. Procédé selon la revendication 10, comprenant l'application de la composition à un emballage alimentaire.

13. Procédé selon la revendication 12, dans lequel l'emballage alimentaire comprend un emballage alimentaire aseptique.

14. Procédé selon la revendication 10, comprenant l'application de la composition à du linge ou des vêtements hospitaliers ou chirurgicaux.

15. Procédé selon la revendication 10, comprenant l'application de la composition pour aseptiser une solution ou une surface dure.

16. Procédé selon la revendication 10, comprenant l'application de la composition pour servir de sporicide dans une solution ou sur une surface dure.

17. Procédé selon la revendication 10, comprenant l'application de la composition pour stériliser une surface dure.

18. Procédé selon la revendication 10, comprenant l'application à une surface, à un corps aqueux, ou à un écoulement d'eau.
